# EUROPEAN PATENT SPECIFICATION

(11) **EP 3 975 664 B1**
(45) Date of publication and mention of the grant of the patent: **12.11.2025**
(21) Application number: 20809447.4
(22) Date of filing: 20.05.2020
(51) Int. Cl.: F27B 17/00, F27D 11/06, H05B 6/42, C21D 1/10, C21D 1/42, C21D 9/28

(54) **SECONDARY COIL MODULE, TRAVERSE HARDENING APPARATUS, AND TRAVERSE HARDENING METHOD**
SEKUNDÄRSPULENMODUL, VORSCHUBHÄRTUNGSVORRICHTUNG UND VORSCHUBHÄRTUNGSVERFAHREN
MODULE DE BOBINE SECONDAIRE, APPAREIL DE DURCISSEMENT TRANSVERSAL ET PROCÉDÉ DE DURCISSEMENT TRANSVERSAL

(30) Priority: 23.05.2019 JP 2019096867
(43) Date of publication of application: 30.03.2022
(73) Proprietor: Nippon Steel Corporation, Tokyo 100-8071 (JP)
(72) Inventor: YAMANE, Akihito, Tokyo 100-8071 (JP); HATA, Toshiyuki, Tokyo 100-8071 (JP); KOZUKA, Chihiro, Tokyo 100-8071 (JP)
(74) Representative: Zimmermann & Partner Patentanwälte mbB
(86) International application number: PCT/JP2020/019965
(87) International publication number: WO 2020/235598

(56) References cited:
- CN-A- 105 557 066
- CN-U- 203 890 388
- JP-A- 2007 230 845
- JP-A- 2007 230 845
- JP-A- 2015 060 634
- JP-A- 2018 041 730
- JP-A- 2018 041 730
- US-A1- 2016 183 330
- US-A1- 2016 234 885

## Description

### [Technical Field]

The present invention relates to a secondary coil module, a traverse hardening device, and a traverse hardening method.

Priority is claimed on Japanese Patent Application No. 2019-096867 filed in Japan on May 23, 2019.

### [Background Art]

Conventionally, a shaft-like body has been subjected to traverse hardening by induction heating to increase a fatigue strength of the shaft-like body. "Traverse hardening" as used herein means performing hardening while moving a coil member or the like with respect to a shaft-like body in an axial direction of the shaft-like body.

**In** induction heating, a shaft-like body is inserted into a primary coil member formed in a solenoidal shape, and a high-frequency current is caused to flow in the primary coil member to heat the shaft-like body using induction heating. **In** induction heating, a shaft-like body is more efficiently heated as a distance between the shaft-like body and the primary coil member becomes smaller. Therefore, when a shaft-like body includes a main body part and a small diameter part provided in the main body part and having a smaller diameter than the main body part, there is a problem that the small diameter part is not easily heated compared to the main body part.

In regard to this problem, a traverse hardening device including a secondary coil member that has an outer diameter smaller than an inner diameter of a primary coil member on an inner side of the primary coil member has been proposed (see Patent Documents 1 to 3, for example). The secondary coil member is formed in an O-shape or a C-shape. In the proposed device using the secondary coil, since a distance between a shaft-like body and a coil member close to the shaft-like body does not change as much between the main body part and the small diameter part, the main body part and the small diameter part can be heated equally.

In these traverse hardening devices, since a plurality of coil members are concentrically disposed, distances between the shaft-like body and the coil members close to the shaft-like body are uniform at all positions in a circumferential direction. Since a coil member having a large number of turns and satisfactory current efficiency can be used, a shaft-like body can be heated uniformly and efficiently with a small amount of current.

Patent Document 4 discloses a manufacturing method for induction heating coil, capable of manufacturing an induction heating coil to have a long service life, and to provide the induction heating coil. An induction heating coil 1 includes: a coil part 3 for induction-heating an object to be processed; a power supply part 2 for supplying electric power to the coil part 3; and a cooling water path 5 disposed inside the power supply part 2 and the coil part 3 and for supplying cooling water to the coil part 3. The coil part 3, the power supply part 2 and the cooling water path 5 are formed using a metal laminate molding method.

### [Citation List]

### [Patent Document]

[Patent Document 1]
   Japanese Examined Patent Application, Second Publication No. S52-021215
[Patent Document 2]
   Japanese Unexamined Patent Application, First Publication No. 2015-108188
[Patent Document 3]
   Japanese Unexamined Patent Application, First Publication No. 2000-87134
[Patent Document 4]
   JP2018041730A

### [Summary of the Invention]

### [Problems to be Solved by the Invention]

However, in the traverse hardening device disclosed in Patent Documents 1 to 3, a shaft-like body having a small diameter part at an end portion in an axial direction is targeted for heating. When the small diameter part of the shaft-like body is provided in an intermediate portion in the axial direction of the shaft-like body, there is a problem in that it takes time to move the secondary coil member attached to the small diameter part to an end in the axial direction of the shaft-like body and remove it from the shaft-like body.

Also, when shaft-like bodies having various shapes are subjected to hardening, secondary coils suitable for the shapes are different. Also when a shaft diameter changes in one shaft-like body, a secondary coil suitable for each shaft diameter is different. If there are several steps of diameter difference, for example, a method of using not only the secondary coil but also a tertiary coil having an outer diameter smaller than an inner diameter of the secondary coil can be considered, but since the tertiary coil needs to have a thickness of a certain amount or more, it is difficult to flexibly deal with a shaft-like body having a diameter difference with a fine pitch by the method using the tertiary coil. Therefore, when hardening is performed using the above-described secondary coil and tertiary coil, the efficiency of energy input is reduced, and overheating is likely to occur at corner portions of the steps or the like at which there is a diameter difference.

The present invention has been made in view of the above circumstances, and an objective thereof is to provide a secondary coil module that can be used for shaft-like bodies with various shapes (diameters) and allows high ease of replacement of a secondary coil, a traverse hardening device including the secondary coil module, and a traverse hardening method that can be realized by the traverse hardening device.

### [Means for Solving the Problem]

In order to solve the above-described problems and achieve the objective, the present invention is as described in the appended claims.

### [Effects of the Invention]

According to the above-described aspects of the present invention, it is possible to provide a secondary coil module that can be used for shaft-like bodies with various shapes (outer diameters) and allows high ease of replacement of a secondary coil, a traverse hardening device including the secondary coil module, and a traverse hardening method that can be realized by the traverse hardening device.

### [Brief Description of Drawings]

FIG. 1 is a perspective view schematically illustrating a pair of arc-shaped coils used as a secondary coil in one embodiment of the present invention.
FIG. 2A is a plan view schematically illustrating an external appearance of a secondary coil module according to the embodiment.
FIG. 2B is a view illustrating the secondary coil module and is a cross-sectional view along line A-A of FIG. 2A.
FIG. 2C is a view illustrating the secondary coil module and is a side view from the arrow B in FIG. 2A.
FIG. 3Ais a perspective view schematically illustrating an external appearance of an arc-shaped coil included in the secondary coil module.
FIG. 3B is a plan view of the arc-shaped coil.
FIG. 3C is a view illustrating the arc-shaped coil and is a cross-sectional view along line Ca-Ca of FIG. 3B.
FIG. 4 is a plan view for exemplifying a case in which an inner diameter of the arc-shaped coil is made to be different under a condition in which an outer diameter of the arc-shaped coil is fixed to one value and a center-to-center distance between a coolant introduction pipe and a coolant discharge pipe is fixed to one value according to the fixed value of the outer diameter of the arc-shaped coil in the secondary coil module. That is, an inner diameter R20 in FIG. 4(b) is made to be larger than that in FIG. 4(a).
FIG. 5 is a schematic side view in which a part of a traverse hardening device according to the embodiment is cut away.
FIG. 6 is a perspective view of a main part of the traverse hardening device.
FIG. 7 is a view illustrating a main part of the traverse hardening device and is a plan sectional view along line D-D of FIG. 5.
FIG. 8 is a perspective view illustrating a state in which a secondary second coil member is disposed at a small diameter part of a shaft-like body in the traverse hardening device.
FIG. 9 is a flowchart showing a traverse hardening method according to the embodiment.
FIG. 10 is a view for explaining a first separation step in the traverse hardening method and is a perspective view of the traverse hardening device.
FIG. 11 is a perspective view for explaining a first separation step in the traverse hardening method.
FIG. 12 is a view for explaining a central heating step in the traverse hardening method and is a schematic side view in which a part of the traverse hardening device is cut away.
FIG. 13 is a perspective view for explaining a second disposing step in the traverse hardening method.
FIG. 14 is a perspective view for explaining the second disposing step in the traverse hardening method.
FIG. 15 is a side view of an analysis model used in a simulation of the traverse hardening device.
FIG. 16 is a view showing a simulation result using a traverse hardening device of example 1.
FIG. 17 is a view illustrating a simulation result using a traverse hardening device of example 2.
FIG. 18 is a view illustrating a simulation result using a traverse hardening device of a comparative example.

### [Embodiments for implementing the Invention]

The inventors of the present application have intensively researched a method of performing traverse hardening on shaft-like bodies having various diameters and steps based on a method of using a secondary coil having good heating efficiency.

An advantage of a secondary coil is that an eddy current generated in the secondary coil is not closed in a circumferential direction thereof but wraps around from an outer circumferential surface to an inner circumferential surface of the secondary coil due to presence of a missing part in the circumferential direction, and thereby a surface of a shaft-like body can be induction-heated by the eddy current that wraps around the inner circumferential surface. On the other hand, when a secondary coil formed in an O-shape or a C-shape as in conventional cases is used, a secondary coil cannot be freely disposed or removed in a gap between a primary coil and a shaft-like body while the primary coil moves relative to the shaft-like body (that is, during traverse hardening).

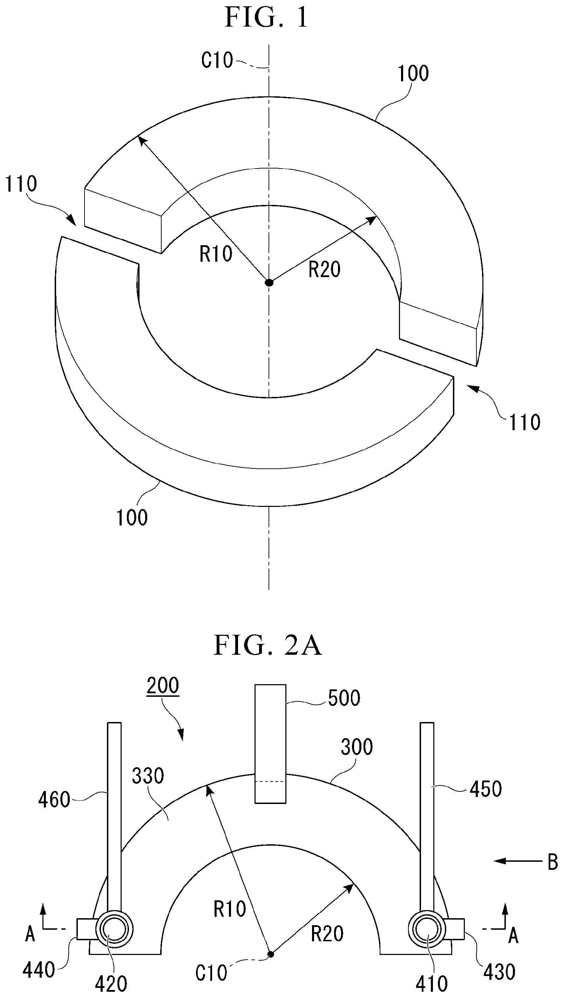

Therefore, as illustrated in FIG. 1, the inventors of the present application have proposed a method of preparing a plurality of arc-shaped coils 100 as secondary coils and replacing the arc-shaped coils 100 according to diameters of shaft-like bodies. According to this method, when the plurality of arc-shaped coils 100 are regarded as an integral secondary coil, since a plurality of missing parts **110** are formed in a circumferential direction thereof, the secondary coils (arc-shaped coils 100) can be freely disposed and removed in a gap between the primary coil and the shaft-like body during traverse hardening while maintaining a function that a surface of the shaft-like body can be induction-heated by an eddy current that wraps around inner circumferential surfaces of the arc-shaped coils 100.

Further, a case in which two (a pair of) arc-shaped coils 100 are used as a secondary coil is illustrated in FIG. 1 as an example, and thus the missing part 110 is formed at two places. However, the number of arc-shaped coils 100 is not limited to two, and three, four, or any necessary number of arc-shaped coils 100 may be prepared as a matter of course.

As illustrated in FIG. 1, an outer diameter R10 of the arc-shaped coil 100 is designed to be smaller than an inner diameter of the primary coil and have a value close to the inner diameter of the primary coil. Also, an inner diameter R20 of the arc-shaped coil 100 is designed to be larger than an outer diameter of the shaft-like body and have a value close to the outer diameter of the shaft-like body. Further, reference symbol C10 in FIG. 1 indicates a central axis of the arc-shaped coils 100. When the plurality of arc-shaped coils 100 designed in this way are prepared according to an outer diameter of the shaft-like body, it is possible to deal with shaft-like bodies with various shapes. Also, even when a shaft diameter changes in one shaft-like body, it can be dealt with by replacing the arc-shaped coil 100 suitable for each shaft diameter during traverse hardening.

The inventors of the present application have studied a configuration of a traverse hardening device that can make use of characteristics of the arc-shaped coil 100 allowing high ease of replacement as described above to the maximum. Also, since the arc-shaped coil 100 itself also generates heat due to the Joule effect when an eddy current flows therethrough, it is necessary to cool the arc-shaped coil 100 during traverse hardening. Therefore, the inventors of the present application further studied a configuration of the traverse hardening device capable of also realizing cooling of the arc-shaped coil 100 during traverse hardening while making use of the characteristics of the arc-shaped coil 100 to the maximum. As a result, a secondary coil module according to the present invention and a traverse hardening device including the secondary coil module were invented.

Hereinafter, one embodiment of the present invention will be described in detail with reference to the drawings.

### [Secondary coil module]

First, a secondary coil module 200 according to the present embodiment will be described.

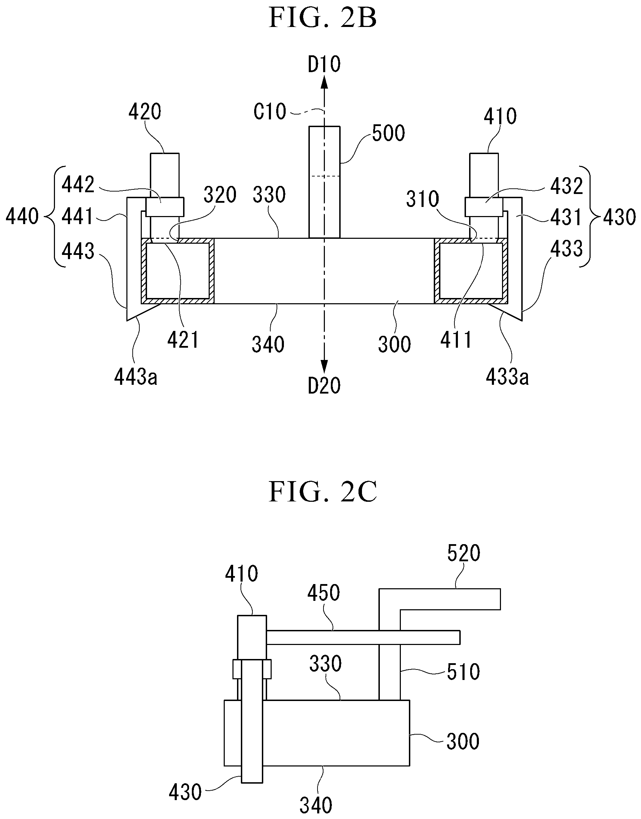

FIGS. 2A to 2C are views schematically illustrating an external appearance of the secondary coil module 200. FIG. 2A is a plan view of the secondary coil module 200. FIG. 2B is a view illustrating the secondary coil module 200 and is a cross-sectional view along line A-A of FIG. 2A. FIG. 2C is a view illustrating the secondary coil module 200 and is a side view from the arrow B in FIG. 2A.

As illustrated in FIGS. 2A to 2C, the secondary coil module 200 includes an arc-shaped coil 300 having a hollow rectangular cross section, cooling jigs (410, 420, 430, 440, 450, and 460) that are detachably configured with respect to the arc-shaped coil 300, and a grip component 500.

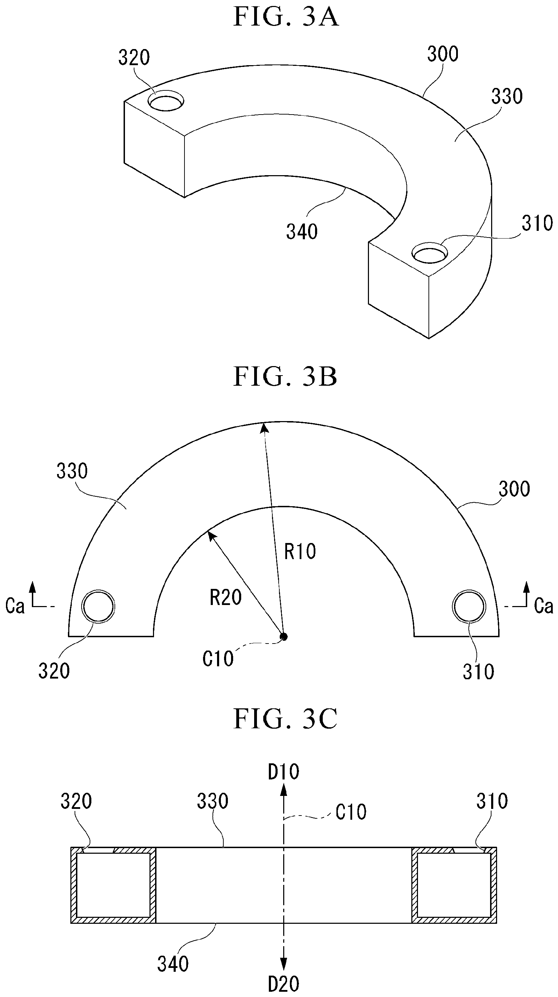

First, the arc-shaped coil 300 will be described with reference to FIGS. 3A to 3C. FIGS. 3A to 3C are views schematically illustrating an external appearance of the arc-shaped coil 300. FIG. 3A is a perspective view of the arc-shaped coil 300. FIG. 3B is a plan view of the arc-shaped coil 300. FIG. 3C is a Ca-Ca cross-sectional view of the arc-shaped coil 300 illustrated in FIG. 3B.

As illustrated in FIGS. 3A to 3C, the arc-shaped coil 300 is a coil having a hollow rectangular cross section and having an arcuate shape in a plan view. The arc-shaped coil 300 has the outer diameter R10 designed to be smaller than an inner diameter of a primary coil to be described later and have a value close to the inner diameter of the primary coil, and the inner diameter R20 designed to be larger than an outer diameter of a shaft-like body (particularly a small diameter part) to be described later and have a value close to the outer diameter of the shaft-like body.

The arc-shaped coil 300 includes a coolant introduction port 310 that opens toward one side (upper side) D10 in the central axis C10 direction of the arc-shaped coil 300 at one end portion of the arc-shaped coil 300 in a circumferential direction, and a coolant discharge port 320 that opens in the same direction (upper side) as the coolant introduction port 310 at the other end portion of the arc-shaped coil 300 in the circumferential direction. The coolant introduction port 310 and the coolant discharge port 320 allow a flow of a coolant such as cooling water in an internal space of the arc-shaped coil 300.

Further, as illustrated in FIG. 3C, the coolant introduction port 310 is formed so that an opening diameter thereof gradually decreases from one side D10 toward the other side D20 in the central axis C10 direction. The coolant discharge port 320 is also formed so that an opening diameter thereof gradually decreases from one side D10 toward the other side D20 in the central axis C10 direction. That is, the coolant introduction port 310 is formed to be tapered from the outside to the inside of the arc-shaped coil 300. The coolant introduction port 310 is also formed to be tapered from the outside to the inside of the arc-shaped coil 300.

The arc-shaped coil 300 has a pair of surfaces perpendicular to the central axis C10 direction. In the following, of the pair of surfaces, an arcuate surface positioned on one side D10 in the central axis C10 direction is referred to as a first arcuate surface 330, and an arcuate surface positioned on the other side D20 in the central axis C10 direction is referred to as a second arcuate surface 340.

Hereinafter, returning to FIGS. 2A to 2C, description of the secondary coil module 200 will be continued.

As illustrated in FIGS. 2A to 2C, the cooling jigs are configured with a coolant introduction pipe 410, a coolant discharge pipe 420, a first connection component 430, a second connection component 440, a coolant supply pipe 450, and a coolant recovery pipe 460.

The coolant introduction pipe 410 is a tubular component used for introducing the coolant into the arc-shaped coil 300 from the outside and has an opening distal end portion 411 that is configured to be fittable to the coolant introduction port 310 of the arc-shaped coil 300. Specifically, the opening distal end portion 411 is configured to have a shape that fits to the coolant introduction port 310 without a clearance therebetween.

The coolant discharge pipe 420 is a tubular component used for discharging the coolant from the inside of the arc-shaped coil 300 to the outside and has an opening distal end portion 421 that is configured to be fittable to the coolant discharge port 320 of the arc-shaped coil 300. Specifically, the opening distal end portion 421 is configured to have a shape that fits to the coolant discharge port 320 without a clearance therebetween.

The first connection component 430 is a component for detachably connecting the coolant introduction pipe 410 to the arc-shaped coil 300 in a state in which the opening distal end portion 411 of the coolant introduction pipe 410 is fitted into the coolant introduction port 310 and a longitudinal direction of the coolant introduction pipe 410 is parallel to the central axis C10 direction of the arc-shaped coil 300.

Specifically, the first connection component 430 includes a first arm part 431 formed of an elastic material and extending in the central axis C10 direction, a first fixing part 432 that fixes one end portion of the first arm part 431 in a longitudinal direction to the coolant introduction pipe 410, and a first claw part 433 provided at the other end portion of the first arm part 431 in the longitudinal direction and protruding inward in a radial direction of the arc-shaped coil 300. An inclined surface 433a is formed at a distal end of the first claw part 433. As described above, the first arm part 431 is formed of an elastic material and has properties like a leaf spring that is curved when an external force is applied and is restored to the original linear shape when the external force disappears.

The second connection component 440 is a component for detachably connecting the coolant discharge pipe 420 to the arc-shaped coil 300 in a state in which the opening distal end portion 421 of the coolant discharge pipe 420 is fitted into the coolant discharge port 320 and a longitudinal direction of the coolant discharge pipe 420 is parallel to the central axis C10 direction of the arc-shaped coil 300.

Specifically, the second connection component 440 includes a second arm part 441 formed of an elastic material and extending in the central axis C10 direction, a second fixing part 442 that fixes one end portion of the second arm part 441 in a longitudinal direction to the coolant discharge pipe 420, and a second claw part 443 provided at the other end portion of the second arm part 441 in the longitudinal direction and protruding inward in the radial direction of the arc-shaped coil 300. An inclined surface 443a is formed at a distal end of the second claw part 443. As described above, the second arm part 441 is formed of an elastic material and has properties like a leaf spring that is curved when an external force is applied and is restored to the original linear shape when the external force disappears.

The coolant supply pipe 450 is a tubular component connected to the coolant introduction pipe 410 to extend outward in the radial direction of the arc-shaped coil 300. The coolant supply pipe 450 is configured to be supplied with a coolant such as cooling water from a secondary coil coolant supply device (not illustrated). That is, the coolant can be supplied from the secondary coil coolant supply device to the arc-shaped coil 300 via the coolant supply pipe 450 and the coolant introduction pipe 410.

Further, the coolant introduction pipe 410 and the coolant supply pipe 450 may be configured as one part using, for example, an L-shaped tubular component.

The coolant recovery pipe 460 is a tubular component connected to the coolant discharge pipe 420 to extend outward in a radial direction of the arc-shaped coil 300. The coolant recovery pipe 460 is configured to send back the coolant used for cooling the arc-shaped coil 300 to the above-described secondary coil coolant supply device. That is, it is possible to forward the coolant from the arc-shaped coil 300 to the secondary coil coolant supply device via the coolant discharge pipe 420 and the coolant recovery pipe 460.

Further, the coolant discharge pipe 420 and the coolant recovery pipe 460 may be configured as one part using, for example, an L-shaped tubular component.

The above is the configuration of the cooling jigs and such cooling jigs can be easily connected to the arc-shaped coil 300 according to the following procedure.
(1) First, the coolant introduction pipe 410 is disposed at a position away from the coolant introduction port 310 on one side D10 so that a central axis of the coolant introduction pipe 410 coincides with a central axis of the coolant introduction port 310, and the opening distal end portion 411 of the coolant introduction pipe 410 faces the other side D20 in the central axis C10 direction.
(2) Next, one or both of the arc-shaped coil 300 and the coolant introduction pipe 410 are moved to approach each other in the central axis C10 direction. In the process, the first claw part 433 of the first connection component 430 first comes into contact with the first arcuate surface 330 of the arc-shaped coil 300, but, in a state as they are, the arc-shaped coil 300 and the coolant introduction pipe 410 are brought yet closer to each other. Then, since the inclined surface 433a formed on the first claw part 433 is pushed away outward in the radial direction by the first arcuate surface 330, an external force outward in the radial direction is applied to the first claw part 433.
   When the external force outward in the radial direction is applied to the first claw part 433 in this way, the first arm part 431 formed of an elastic material is curved outward in the radial direction, and thereby the arc-shaped coil 300 and the coolant introduction pipe 410 can be brought closer to each other without being disturbed by the first claw part 433.
(3) Next, the arc-shaped coil 300 and the coolant introduction pipe 410 are brought yet closer to each other until the opening distal end portion 411 of the coolant introduction pipe 410 is fitted into the coolant introduction port 310 (that is, until the opening distal end portion 411 fits to the coolant introduction port 310 without a clearance therebetween). Here, since the coolant introduction port 310 is formed so that the opening diameter gradually decreases from one side D10 toward the other side D20 in the central axis C10 direction, movement of the coolant introduction pipe 410 to the other side D20 can be stopped in a state in which the opening distal end portion 411 of the coolant introduction pipe 410 is fitted into the coolant introduction port 310.

In this way, when the opening distal end portion 411 of the coolant introduction pipe 410 is in a state of being fitted into the coolant introduction port 310, the external force applied to the first claw part 433 disappears, and the first arm part 431 is restored to the original linear shape. As a result, the first claw part 433 is in a state of being locked (hooked) to the second arcuate surface 340 of the arc-shaped coil 300, and the coolant introduction pipe 410 is connected to the arc-shaped coil 300 in a state in which the opening distal end portion 411 of the coolant introduction pipe 410 is fitted into the coolant introduction port 310 (see FIG. 2B).

With the procedure described above, the coolant introduction pipe 410 can be easily connected to the arc-shaped coil 300. With a similar procedure, the coolant discharge pipe 420 can also be easily connected to the arc-shaped coil 300.
(1) That is, first, the coolant discharge pipe 420 is disposed at a position away from the coolant discharge port 320 on one side D10 so that a central axis of the coolant discharge pipe 420 coincides with a central axis of the coolant discharge port 320, and the opening distal end portion 421 of the coolant discharge pipe 420 faces the other side D20 in the central axis C10 direction.
(2) Next, one or both of the arc-shaped coil 300 and the coolant discharge pipe 420 are moved to approach each other in the central axis C10 direction. In the process, the second claw part 443 of the second connection component 440 first comes into contact with the first arcuate surface 330 of the arc-shaped coil 300, but, in a state as they are, the arc-shaped coil 300 and the coolant discharge pipe 420 are brought yet closer to each other. Then, since the inclined surface 443a formed on the second claw part 443 is pushed away outward in the radial direction by the first arcuate surface 330, an external force outward in the radial direction is applied to the second claw part 443.
   When the external force outward in the radial direction is applied to the second claw part 443 in this way, the second arm part 441 formed of an elastic material is curved outward in the radial direction, and thereby the arc-shaped coil 300 and the coolant discharge pipe 420 can be brought closer to each other without being disturbed by the second claw part 443.
(3) Next, the arc-shaped coil 300 and the coolant discharge pipe 420 are brought yet closer to each other until the opening distal end portion 421 of the coolant discharge pipe 420 is fitted into the coolant discharge port 320 (that is, until the opening distal end portion 421 fits to the coolant discharge port 320 without a clearance therebetween). Here, since the coolant discharge port 320 is formed so that the opening diameter gradually decreases from one side D10 toward the other side D20 in the central axis C10 direction, movement of the coolant discharge pipe 420 to the other side D20 can be stopped in a state in which the opening distal end portion 421 of the coolant discharge pipe 420 is fitted into the coolant discharge port 320.

In this way, when the opening distal end portion 421 of the coolant discharge pipe 420 is in a state of being fitted into the coolant discharge port 320, the external force applied to the second claw part 443 disappears, and the second arm part 441 is restored to the original linear shape. As a result, the second claw part 443 is in a state of being locked (hooked) to the second arcuate surface 340 of the arc-shaped coil 300, and the coolant discharge pipe 420 is connected to the arc-shaped coil 300 in a state in which the opening distal end portion 421 of the coolant discharge pipe 420 is fitted into the coolant discharge port 320 (see FIG. 2B).

Further, as illustrated in FIG. 2B, an external force outward in a radial direction is applied to the inclined surface 433a in a state in which the coolant introduction pipe 410 is connected to the arc-shaped coil 300. Thereby, if the external force outward in the radial direction is applied to the first claw part 433 again to cause the first arm part 431 to be curved outward in the radial direction, the coolant introduction pipe 410 can be easily removed from the arc-shaped coil 300.

In the same way, the coolant discharge pipe 420 can also be easily removed from the arc-shaped coil 300. That is, an external force outward in the radial direction is applied to the inclined surface 443a in a state in which the coolant discharge pipe 420 is connected to the arc-shaped coil 300. Thereby, if the external force outward in the radial direction is applied to the second claw part 443 again to cause the second arm part 441 to be curved outward in the radial direction, the coolant discharge pipe 420 can be easily removed from the arc-shaped coil 300.

Further, the secondary coil module 200 includes the grip component 500 fixed to the arc-shaped coil 300. The grip component 500 is an L-shaped component fixed to a central portion in a circumferential direction of the first arcuate surface 330 of the arc-shaped coil 300. The grip component 500 includes a first portion 510 extending from the first arcuate surface 330 of the arc-shaped coil 300 to one side D10 in the central axis C10 direction, and a second portion 520 extending outward in a radial direction from a distal end of the first portion 510. The grip component 500 is a component that is gripped by a gripping mechanism such as a robot arm when a position of the arc-shaped coil 300 of the secondary coil module 200 is controlled by a positioning device to be described later.

Although the configuration of the secondary coil module 200 has been described above, it is desirable that at least the parts in contact with the arc-shaped coil 300, that is, the coolant introduction pipe 410, the coolant discharge pipe 420, the first connection component 430, the second connection component 440, and the grip component 500 be formed of an electrically insulating material.

Further, in the above-described description, a case in which a configuration including the first arm part 431, the first fixing part 432, and the first claw part 433 is employed as the configuration of the first connection component 430 has been exemplified, but a configuration of the connection component 430 is not limited only thereto. Any configuration may be employed as the configuration of the first connection component 430 as long as the coolant introduction pipe 410 can be detachably connected to the arc-shaped coil 300 in a state in which the opening distal end portion 411 of the coolant introduction pipe 410 is fitted into the coolant introduction port 310 and a longitudinal direction of the coolant introduction pipe 410 is parallel to the central axis C10 direction of the arc-shaped coil 300.

The same applies to the second connection component 440. That is, any configuration may be employed as the configuration of the second connection component 440 as long as the coolant discharge pipe 420 can be detachably connected to the arc-shaped coil 300 in a state in which the opening distal end portion 421 of the coolant discharge pipe 420 is fitted into the coolant discharge port 320 and a longitudinal direction of the coolant discharge pipe 420 is parallel to the central axis C10 direction of the arc-shaped coil 300.

According to the secondary coil module 200 as described above, a plurality of arc-shaped coils 300 can be replaced each time by adjusting positions of the coolant introduction pipe 410 and the coolant discharge pipe 420 according to a size of the arc-shaped coil 300. That is, depending on the outer diameter of the arc-shaped coil 300, if positions of the coolant introduction pipe 410 and the coolant discharge pipe 420 are made to be positioned on an outer side of the arc-shaped coil 300 in the radial direction when the outer diameter is large, and conversely, on an inner side thereof in the radial direction when the outer diameter is small, it is possible to handle a plurality of arc-shaped coils 300 without changing a distance between the coolant introduction pipe 410 and the coolant discharge pipe 420.

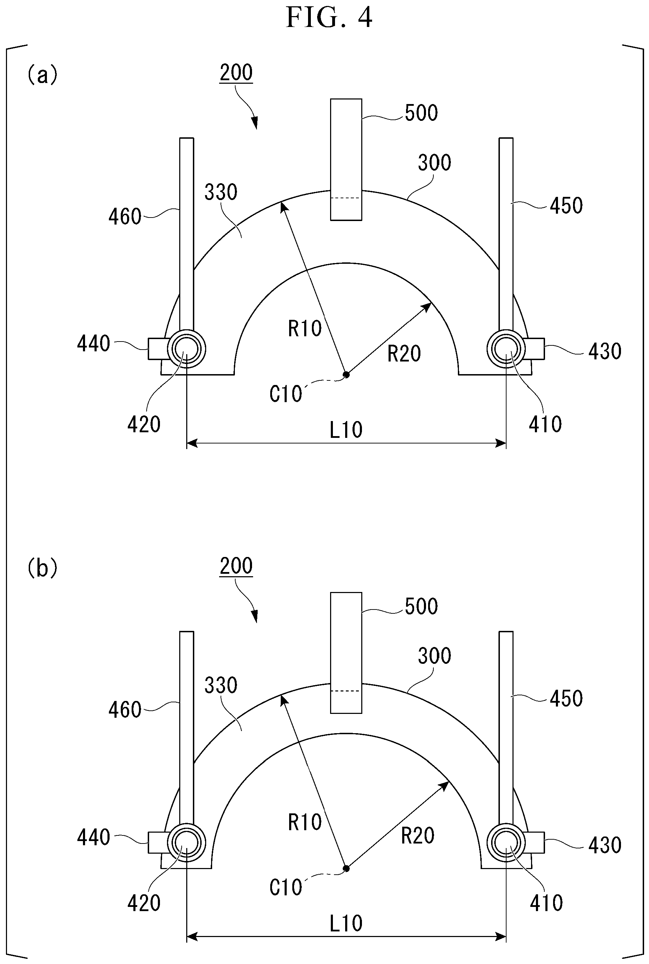

Alternatively, as illustrated in FIGS. 4(a) and 4(b), a center-to-center distance L10 between the coolant introduction pipe 410 and the coolant discharge pipe 420 may be set according to the inner diameter of the primary coil, that is, the outer diameter R10 of the arc-shaped coil 300. That is, the outer diameter R10 of the arc-shaped coil 300 is fixed to one value, and then the center-to-center distance L10 between the coolant introduction pipe 410 and the coolant discharge pipe 420 is fixed to one value according to the fixed value of the outer diameter R10. In this way, the arc-shaped coils 300 having various inner diameters R20 can be easily replaced without needing to adjust positions of the coolant introduction pipe 410 and the coolant discharge pipe 420.

FIG. 4(a) illustrates a case in which the inner diameter R20 of the arc-shaped coil 300 is relatively small. FIG. 4(b) illustrates a case in which the inner diameter R20 of the arc-shaped coil 300 is relatively large. From these figures, if the outer diameter R10 of the arc-shaped coil 300 is fixed to one value and the center-to-center distance L10 between the coolant introduction pipe 410 and the coolant discharge pipe 420 is fixed to one value according to the fixed value of the outer diameter R10, it is possible to obtain the secondary coil module 200 in which the arc-shaped coils 300 having various inner diameters R20 can be easily replaced without needing to adjust positions of the coolant introduction pipe 410 and the coolant discharge pipe 420.

As described above, according to the present embodiment, it is possible to obtain the secondary coil module 200 that can be used for shaft-like bodies with various shapes (outer diameters), allows high ease of replacement of the secondary coil (arc-shaped coil 300), and furthermore, can also cool the secondary coil during traverse hardening.

### [Traverse hardening device]

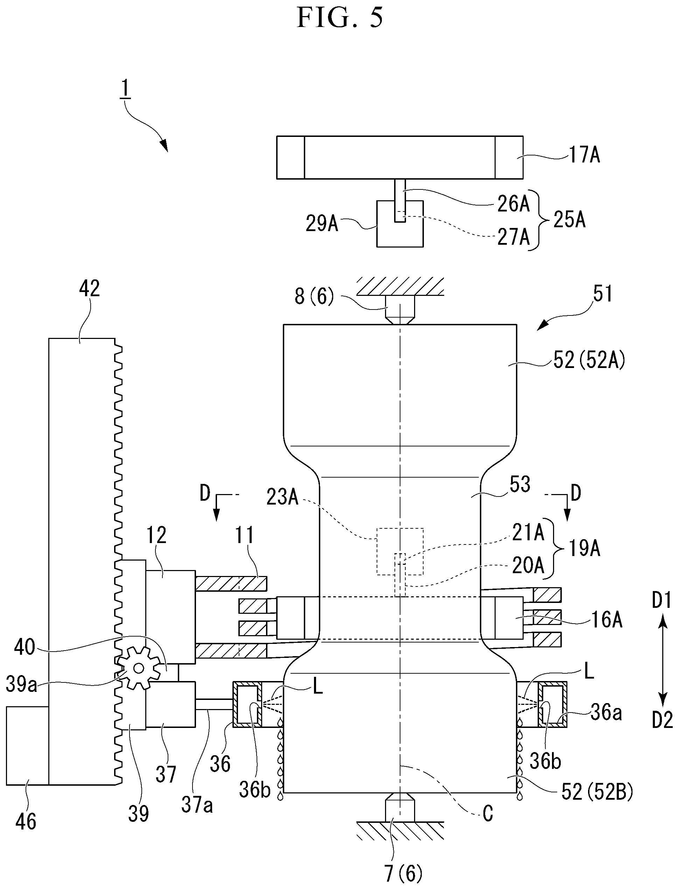

Next, a traverse hardening device 1 according to the present embodiment will be described in detail with reference to FIGS. 5 to 14.

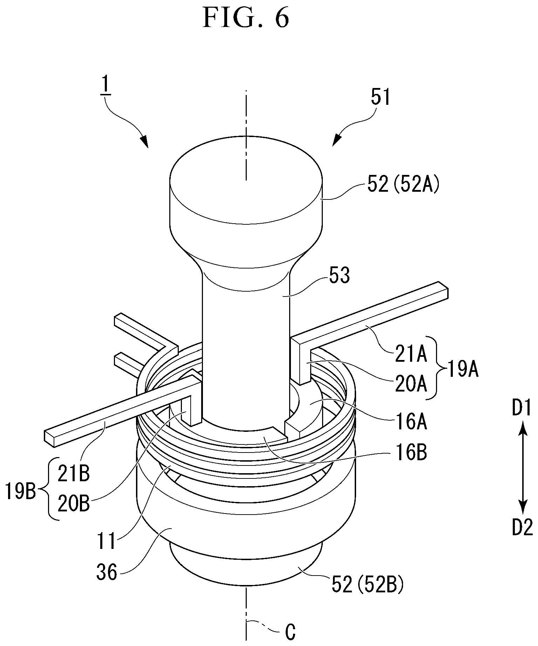

As illustrated in FIGS. 5 and 6, the traverse hardening device 1 is a device for performing traverse hardening on a shaft-like body 51 such as an axle of a railway vehicle by using a high-frequency current.

First, the shaft-like body 51 will be described. The shaft-like body 51 includes a main body part 52 and a small diameter part 53 provided in an intermediate portion of the main body part 52 in an axis C direction. The main body part 52 and the small diameter part 53 are each formed in a columnar shape, and an axis of the small diameter part 53 coincides with the axis C of the main body part 52.

In the following, a portion of the main body part 52 disposed on one side D1 in the axis C direction with respect to the small diameter part 53 is referred to as a first main body part 52A. A portion disposed on the other side D2 in the axis C direction with respect to the small diameter part 53 is referred to as a second main body part 52B.

The first main body part 52A, the small diameter part 53, and the second main body part 52B are each formed in a columnar shape and are disposed on the common axis C. An outer diameter of the small diameter part 53 is smaller than outer diameters of the first main body part 52A and the second main body part 52B.

The shaft-like body 51 is formed of a material having conductivity such as carbon steel or a low-alloy steel containing 95% by weight or more of iron (Fe), which is ferrite.

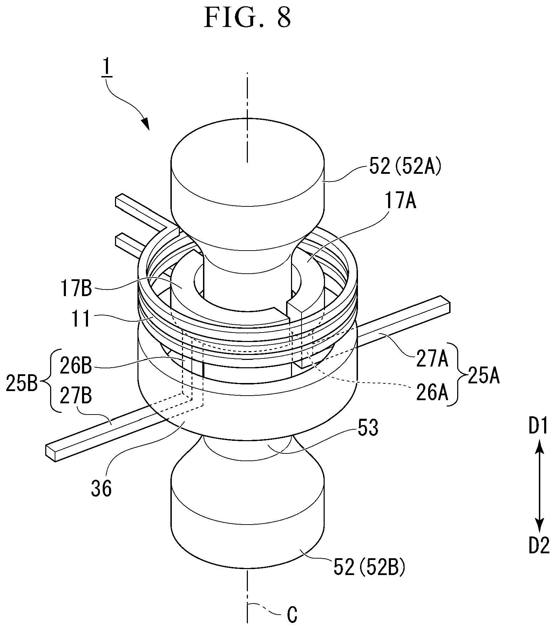

The traverse hardening device 1 includes a support member 6, a primary coil member 11, a plurality of secondary first coil members 16A and 16B, a plurality of secondary second coil members 17A and 17B (see FIG. 8), a cooling ring 36, and a control unit 46.

Further, the secondary first coil members (secondary first coil modules) 16A and 16B and the secondary second coil members (secondary second coil module) 17A and 17B have the same configurations (features) as the secondary coil module 200 described above, but, for convenience of explanation, only portions corresponding to the arc-shaped coil 300 and the grip component 500 are illustrated in FIGS. 5 to 14. That is, in the following, the secondary first coil members 16A and 16B and the secondary second coil members 17A and 17B will be described as portions corresponding to the arc-shaped coil 300 itself. A portion corresponding to the grip component 500 will be described below.

Also, normally, the traverse hardening device 1 includes a secondary coil coolant supply device that supplies a coolant such as cooling water to each secondary coil module, but descriptions on these are also omitted in FIGS. 5 to 14. During traverse hardening, the coolant is supplied from the secondary coil coolant supply device to each secondary coil module, and thereby each arc-shaped coil thereof is cooled.

As illustrated in FIG. 5, the support member 6 includes a lower center 7 and an upper center 8. The lower center 7 supports the second main body part 52B of the shaft-like body 51 from below the second main body part 52B. The upper center 8 supports the first main body part 52A of the shaft-like body 51 from above the first main body part 52A. The lower center 7 and the upper center 8 support the shaft-like body 51 so that the axis C extends in a vertical direction in which one side D1 is upward and the other side D2 is downward in the axis C direction.

The primary coil member 11 is formed in a solenoidal shape in which an element wire of the coil is spirally wound. An inner diameter of the primary coil member 11 is larger than outer diameters of the first main body part 52A and the second main body part 52B. The shaft-like body 51 is coaxially inserted inside the primary coil member 11.

Each end portion of the primary coil member 11 is electrically and mechanically connected to a current transformer 12. The current transformer 12 causes a high-frequency current to flow in the primary coil member 11.

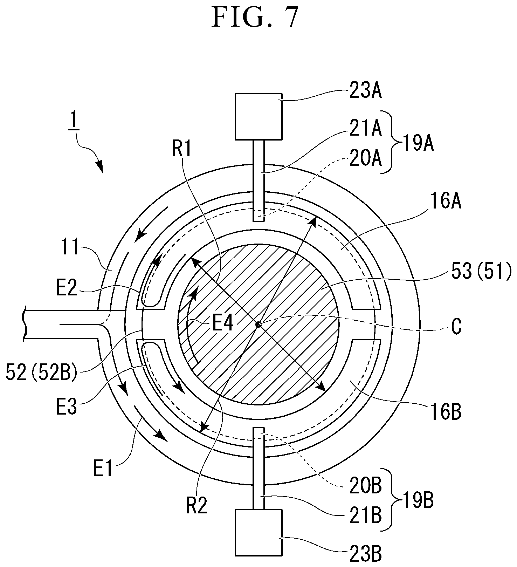

As illustrated in FIGS. 6 and 7, in the present embodiment, two secondary first coil members 16A and 16B are provided as the plurality of secondary first coil members 16A and 16B. However, the number of secondary first coil members included in the traverse hardening device 1 is not limited to two as long as there are a plurality of secondary first coil members and may be three or more.

The secondary first coil members 16A and 16B are formed in an arc shape in a plan view in the axis C direction. The secondary first coil members 16A and 16B are disposed to be aligned in a circumferential direction of the shaft-like body 51 (hereinafter, simply referred to as a circumferential direction) and to be separated from each other at two positions in the circumferential direction. This circumferential direction coincides with a circumferential direction of the primary coil member 11 or the like. In this example, as illustrated in FIG. 5, a length of the secondary first coil members 16A and 16B in the axis C direction is considerably smaller than a length of the small diameter part 53 of the shaft-like body 51 in the axis C direction.

As illustrated in FIG. 7, a diameter R1 of an inscribed circle in contact with outer surfaces of the secondary first coil members 16A and 16B facing the axis C (that is, an inner diameter formed by inner circumferential surfaces of the secondary first coil members 16A and 16B) is larger than a diameter (that is, an outer diameter) of the small diameter part 53 of the shaft-like body 51. It is desirable that the inner diameter R1 be smaller than diameters (that is, outer diameters) of the first main body part 52A and the second main body part 52B. A diameter R2 of a circumscribed circle in contact with outer surfaces of the secondary first coil members 16A and 16B on a side opposite to the axis C (that is, an outer diameter formed by an outer circumferential surface of the secondary first coil members 16A and 16B) is smaller than the inner diameter of the primary coil member 11.

The secondary first coil members 16A and 16B can be disposed at positions on an outer side of the small diameter part 53 in a radial direction and in the primary coil member 11 in a state of being separated from the small diameter part 53 and the primary coil member 11. Further, the radial direction coincides with a radial direction of the primary coil member 11 or the like.

As illustrated in FIGS. 6 and 7, first support parts 19A and 19B are fixed to the secondary first coil members 16A and 16B.

The first support part 19A includes a first support piece 20A extending upward from the secondary first coil member 16A, and a first connecting piece 21A extending outward in a radial direction from an upper end of the first support piece 20A. The first support piece 20A is disposed at a central portion or an end portion in a circumferential direction of the secondary first coil member 16A. It is desirable to avoid interference of the first support piece 20A with the first main body part 52A and the second main body part 52B by attaching the first support piece 20A to a position at an end portion on an outer side of the secondary first coil member 16A in the radial direction and on an outer side in the radial direction of the first main body part 52A and the second main body part 52B. The first connecting piece 21A extends outward in the radial direction from an upper end portion of the first support piece 20A which is opposite to a lower end portion to which the secondary first coil member 16A is fixed.

Similarly to the first support part 19A, the first support part 19B includes a first support piece 20B and a first connecting piece 21B. The first connecting pieces 21A and 21B are disposed on the same straight line. The first support parts 19A and 19B are formed by bending, for example, a rod-shaped member having electrical insulation properties at a right angle. The first support parts 19A and 19B described above are portions corresponding to the grip component 500 in the secondary coil module 200.

As illustrated in FIG. 7, a first moving unit 23A (positioning device) is connected to the first connecting piece 21A. Also, a first moving unit 23B (positioning device) is connected to the first connecting piece 21B. The first moving units 23A and 23B include, for example, a triaxial stage and a drive motor (which are not illustrated) and can move the secondary first coil members 16A and 16B in a vertical direction and a direction along a horizontal plane via the first support parts 19A and 19B.

As illustrated in FIGS. 5 and 8, the secondary second coil members 17A and 17B are configured similarly to the secondary first coil members 16A and 16B. The primary coil member 11, the secondary first coil members 16A and 16B, and the secondary second coil members 17A and 17B are each formed of a material having conductivity such as copper. A second support part 25A is fixed to the secondary second coil member 17A. A second support part 25B is fixed to the secondary second coil member 17B.

The second support part 25A includes a second support piece 26A extending downward from a lower surface of the secondary second coil member 17A, and a second connecting piece 27A extending outward in a radial direction from a lower end of the second support piece 26A. The second support piece 26A is connected to a central portion or an end portion in a circumferential direction of the secondary second coil member 17A. It is desirable to avoid interference of the second support piece 26A with the first main body part 52A and the second main body part 52B by attaching the second support piece 26A to a position at an end portion on an outer side in the radial direction of the secondary second coil member 17A and on an outer side in the radial direction of the first main body part 52A and the second main body part 52B. The second connecting piece 27A extends outward in the radial direction from a lower end portion of the second support piece 26A which is opposite to an upper end portion to which the secondary second coil member 17A is fixed.

Similarly to the second support part 25A, the second support part 25B includes a second support piece 26B and a second connecting piece 27B. The second connecting pieces 27A and 27B are disposed on the same straight line. In this example, the first connecting pieces 21A and 21B and the second connecting pieces 27A and 27B are disposed on the same plane. The second support parts 25A and 25B described above are portions corresponding to the grip component 500 in the secondary coil module 200.

As illustrated in FIG. 5, second moving units 29A and 29B (second moving unit 29B is not illustrated) configured similarly to the first moving units 23A and 23B are connected to the second connecting pieces 27A and 27B (second connecting piece 27B is not illustrated). The second moving unit 29A (positioning device) can move the secondary second coil member 17A in a vertical direction and a direction along a horizontal plane via the second support part 25A. The second moving unit 29B (positioning device) can move the secondary second coil member 17B in a vertical direction and a direction along a horizontal plane via the second support part 25B.

As illustrated in FIGS. 5 and 6, the cooling ring 36 is formed in a solenoidal shape. An internal space 36a is formed in the cooling ring 36. A plurality of nozzles 36b communicating with the internal space 36a are formed on an inner circumferential surface of the cooling ring 36 to be spaced apart from each other in the circumferential direction. The shaft-like body 51 is inserted inside the cooling ring 36. The cooling ring 36 is disposed below the primary coil member 11.

A pump 37 is connected to the cooling ring 36 via a water pipe 37a. The pump 37 supplies a cooling liquid L such as water into the internal space 36a of the cooling ring 36 via the water pipe 37a. The cooling liquid L supplied into the internal space 36a is ejected toward an outer circumferential surface of the shaft-like body 51 through the plurality of nozzles 36b to cool the shaft-like body 51.

As illustrated in FIG. 5, the primary coil member 11, the current transformer 12, the cooling ring 36, and the pump 37 are fixed to the support plate 39. A pinion 39a is formed on the support plate 39. A motor 40 which drives the pinion 39a is attached to the support plate 39.

The pinion 39a of the support plate 39 meshes with a rack 42. When the motor 40 is driven, the pinion 39a rotates in a forward direction or a reverse direction, and thereby the support plate 39 moves upward or downward with respect to the rack 42.

The rack 42 may be a ball screw. In this case, a plurality of pinions 39a may be disposed to sandwich the ball screw.

Although not illustrated, the control unit 46 includes an arithmetic circuit and a memory. A control program or the like for driving an arithmetic circuit is stored in the memory.

The control unit 46 is connected to the current transformer 12, the first moving units 23A and 23B, the second moving units 29A and 29B, the pump 37, and the motor 40 to control them.

### [Traverse hardening method]

Next, a traverse hardening method realized by using the traverse hardening device 1 configured as described above will be described.

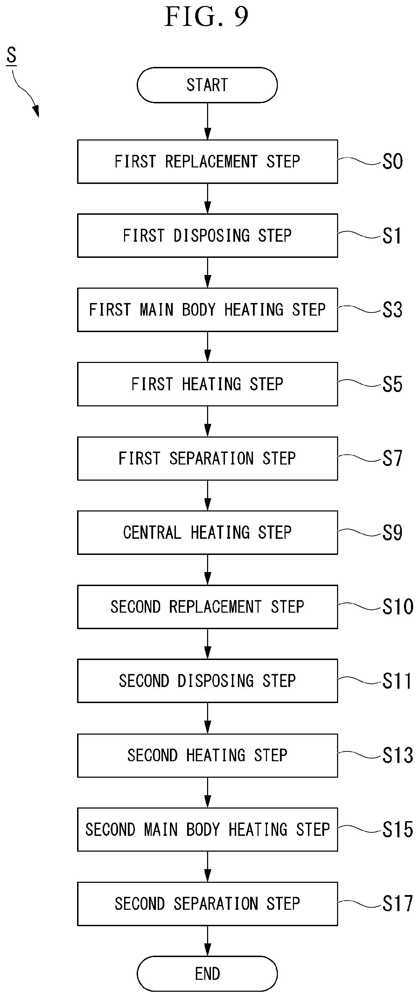

FIG. 9 is a flowchart showing a traverse hardening method S according to the present embodiment.

First, in a first replacement step (replacement step, step S0 shown in FIG. 9), a secondary coil module (that is, the secondary first coil members 16A and 16B) including an arc-shaped coil suitable for heating a lower end portion of the small diameter part 53 is equipped by replacing an arc-shaped coil of the secondary coil module for heating the lower end portion (end portion of the other side) of the small diameter part 53 of the shaft-like body 51 according to an outer diameter of the lower end portion of the small diameter part 53.

Next, in a first disposing step (disposing step, step S1 shown in FIG. 9), as illustrated in FIGS. 5 and 6, the control unit 46 drives the first moving units 23A and 23B to dispose the secondary first coil members 16A and 16B at a lower end portion of the small diameter part 53 of the shaft-like body 51. At this time, the secondary first coil members 16A and 16B are disposed on an outer side in a radial direction of the small diameter part 53 to be spaced apart from each other at two positions in the circumferential direction. Further, the secondary first coil members 16A and 16B are disposed so that the diameter R1 (that is, the inner diameter) of the inscribed circle in contact with outer circumferential surfaces of the secondary first coil members 16A and 16B facing the axis C is made larger than the outer diameter of the small diameter part 53 of the shaft-like body 51. At this time, it is desirable to dispose the secondary first coil members 16A and 16B so that the inner diameter R1 is smaller than the outer diameters of the first main body part 52A and the second main body part 52B. The inner circumferential surfaces of the secondary first coil members 16A and 16B are separated toward a radially outward side from the outer circumferential surface of the small diameter part 53.

When the first disposing step S1 ends, the processing proceeds to step S3.

Next, in a first main body heating step (step S3), the control unit 46 performs traverse hardening on the second main body part 52B of the shaft-like body 51.

Specifically, the current transformer 12 is driven to cause a high-frequency current to flow through the primary coil member 11. The pump 37 is driven to eject the cooling liquid L from the plurality of nozzles 36b of the cooling ring 36. The motor 40 is driven to move the support plate 39 upward with respect to the rack 42. The primary coil member 11 and the cooling ring 36 are externally fitted to the shaft-like body 51 in that order and moved upward. The "upward" refers to a moving direction of the primary coil member 11 with respect to the shaft-like body 51.

The second main body part 52B is heated upward (toward the small diameter part 53) from the lower end portion thereof by the primary coil member 11, and furthermore, is rapidly cooled by the cooling ring 36. When a high-frequency current is caused to flow through the primary coil member 11, electromagnetic induction of the primary coil member 11 causes a current to flow directly through the second main body part 52B without interposing another coil, and Joule heat is generated in the second main body part 52B due to electrical resistance of the second main body part 52B. The second main body part 52B is heated by induction heating and becomes austenite. The second main body part 52B heated by induction heating is cooled by the cooling ring 36 that moves upward following the primary coil member **11,** and thereby the second main body part 52B becomes martensite. In this way, traverse hardening of the second main body part 52B is performed.

Further, in the first main body heating step S3, and a first heating step S5, a first separation step S7, a central heating step S9, a second disposing step S11, a second heating step S13, and a second main body heating step S15 which are to be described later, traverse hardening is performed while upward movement of the primary coil member 11 and the cooling ring 36 with respect to the shaft-like body 51 is not stopped.

When the first main body heating step S3 ends, the processing proceeds to step S5.

Next, in the first heating step (heating step, step S5), when at least some of the secondary first coil members 16A and 16B are disposed in the primary coil member 11, the lower end portion of the small diameter part 53 starts to be heated. At this time, the secondary first coil members 16A and 16B are separated on a radial inner side from the primary coil member 11.

When a high-frequency current is caused to flow through the primary coil member 11, electromagnetic induction of the primary coil member 11 causes a current to flow through the lower end portion of the small diameter part 53 via the secondary first coil members 16A and 16B, and the lower end portion of the small diameter part 53 is heated due to induction heating. Specifically, as illustrated in FIG. 7, when a current flows through the primary coil member 11 in a direction E1, eddy currents in directions E2 and E3 flow on outer surfaces of the secondary first coil members 16A and 16B due to electromagnetic induction, and furthermore, an eddy current in a direction E4 flows on the outer surface of the small diameter part 53. In this way, the lower end portion of the small diameter part 53 is heated.

Further, the first disposing step S1 may be performed after the first main body heating step S3 and before the first heating step S5.

When the first heating step S5 ends, the processing proceeds to step S7.

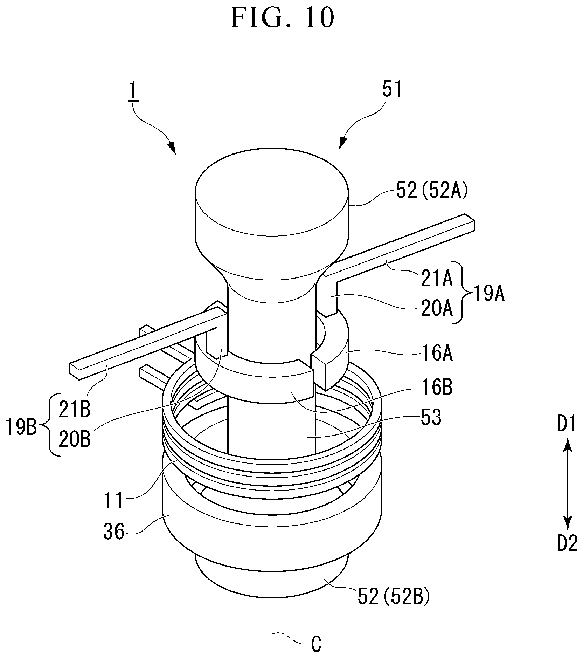

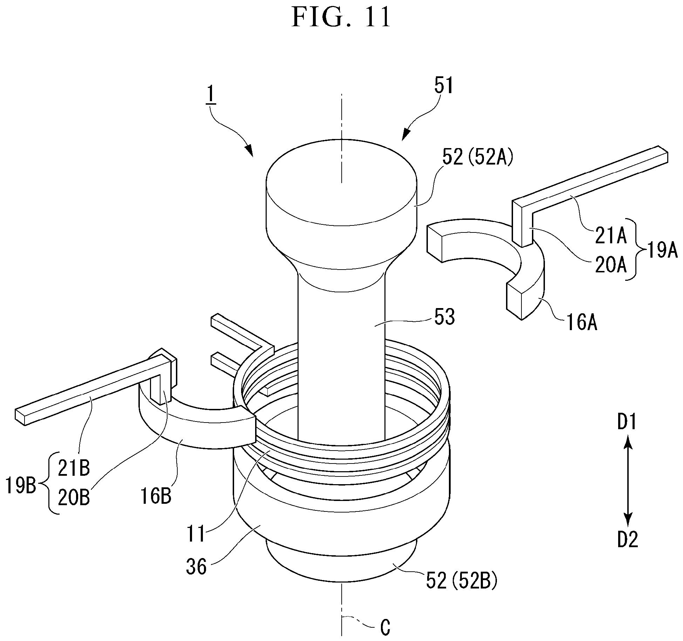

Next, in the first separation step (separation step, step S7), the control unit 46 drives the first moving units 23A and 23B to move the secondary first coil members 16A and 16B upward with respect to the primary coil member 11 using the first support parts 19A and 19B as illustrated in FIG. 10. Then, as illustrated in FIG. 11, the secondary first coil members 16A and 16B are separated toward a radially outward side from the small diameter part 53. The first separation step S7 is performed after the first heating step S5.

When the first separation step S7 ends, the processing proceeds to step S9.

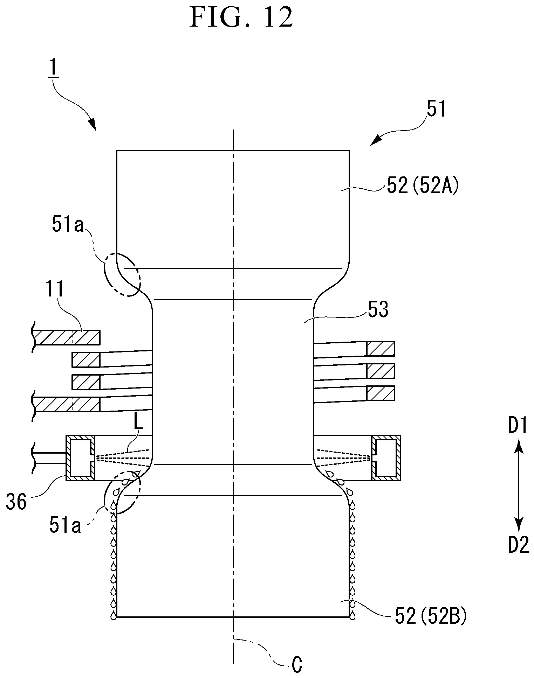

Next, in the central heating step (step S9), as illustrated in FIG. 12, a central portion of the small diameter part 53 in the axis C direction is heated. At this time, since the secondary first coil members 16A and 16B are not disposed between the primary coil member 11 and the small diameter part 53, a current value of the high-frequency current flowing through the primary coil member 11 is increased. The primary coil member 11 when the central portion of the small diameter part 53 is heated is further separated with respect to connecting parts 51a (particularly, portions of the shaft-like body 51 protruding outward) connecting the first main body part 52A and the second main body part 52B to the small diameter part 53 in the shaft-like body 51 than when the primary coil member 11 is disposed at the position in which the lower end portion of the small diameter part 53 is heated. Therefore, even if a value of the current flowing through the primary coil member **11** is increased, temperatures of the connecting parts 51a increasing too much can be suppressed.

When the heating of the central portion of the small diameter part 53 in the axis C direction is completed, the current value of the high-frequency current flowing through the primary coil member **11** is reduced and returned to the original current value.

When the central heating step S9 ends, the processing proceeds to step S10.

Further, instead of the first separation step S7 and the central heating step S9, the central portion of the small diameter part 53 in the axis C direction may be heated using the secondary first coil members 16A and 16B in the central heating step. In that case, the first separation step of separating the secondary first coil members 16A and 16B toward a radially outward side from the small diameter part 53 is performed after the central heating step.

Next, in a second replacement step (replacement step, step S10 shown in FIG. 9), the arc-shaped coil of the secondary coil module for heating an upper end portion (end portion on one side) of the small diameter part 53 of the shaft-like body 51 is replaced according to an outer diameter of the upper end portion of the small diameter part 53. Thereby, the secondary coil module (that is, the secondary second coil members 17A and 17B) including the arc-shaped coil suitable for heating the upper end portion of the small diameter part 53 is equipped.

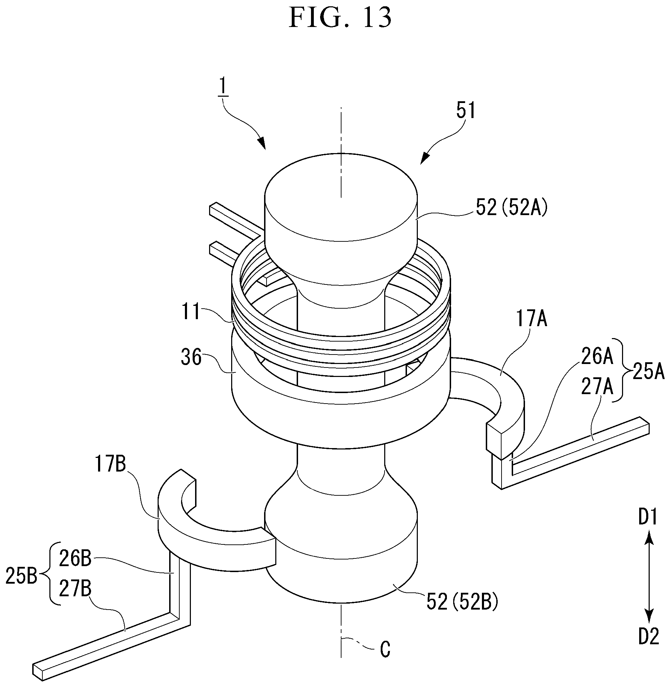

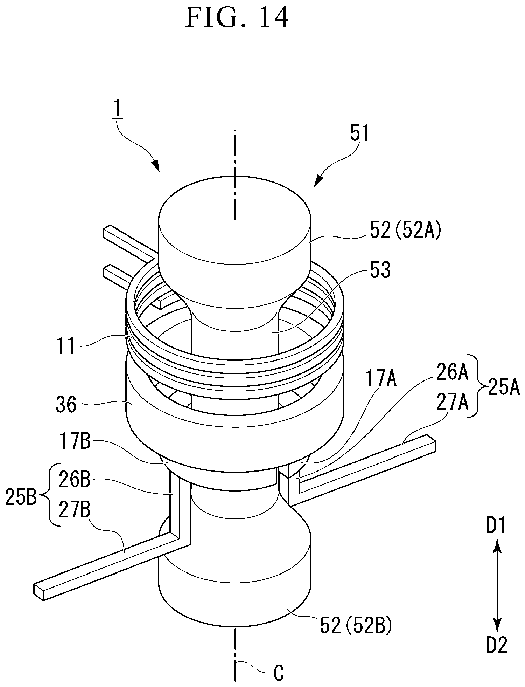

Next, in the second disposing step (disposing step, step S11), the control unit 46 drives the second moving units 29A and 29B to bring the secondary second coil members 17A and 17B closer to the lower end portion of the small diameter part 53 from below the primary coil member 11 and the cooling ring 36 as illustrated in FIG. 13. Then, the secondary second coil members 17A and 17B are moved upward as illustrated in FIG. 14, and the secondary second coil members 17A and 17B are disposed at the upper end portion of the small diameter part 53 after passing through the primary coil member 11 as illustrated in FIG. 8. The secondary second coil members 17A and 17B are separated toward a radially outward side from the small diameter part 53.

When the second disposing step S11 ends, the processing proceeds to step S13.

Next, in the second heating step (heating step, step S13), the control unit 46 heats the upper end portion of the small diameter part 53 when at least some of the secondary second coil members 17A and 17B are disposed in the primary coil member 11 that moves upward with respect to the shaft-like body 51 as illustrated in FIG. 8. At this time, the secondary second coil members 17A and 17B are separated from the primary coil member 11 in the radial direction.

When the second heating step S13 ends, the processing proceeds to step S15.

Next, in the second main body heating step (step S15), the control unit 46 performs traverse hardening on the first main body part 52A when the first main body part 52A of the shaft-like body 51 is disposed in the primary coil member 11. When the second main body heating step S15 ends, the processing proceeds to step S17.

Next, in a second separation step (step S17), the control unit 46 drives the second moving units 29A and 29B to separate the secondary second coil members 17A and 17B toward a radially outward side from the small diameter part 53. Further, the second separation step S17 may be performed before the second main body heating step S15.

After the small diameter part 53 and the first main body part 52A are heated in the first heating step S5, the central heating step S9, the second heating step S13, and the second main body heating step S15, the small diameter part 53 and the first main body part 52A are cooled by ejecting the cooling liquid L from the cooling ring 36.

When the second separation step S17 ends, all the steps of the traverse hardening method S end, and the entire shaft-like body 51 is in a state of having been subjected to traverse hardening. The shaft-like body 51 that has been subjected to traverse hardening is improved in hardness.

As described above, in the traverse hardening method S, the shaft-like body 51 is subjected to traverse hardening while the coil members 16A, 16B, 17A, and 17B are disposed on a radially outer side of the small diameter part 53 or the coil members 16A, 16B, 17A, and 17B are made to be separated from the small diameter part 53.

As described above, according to the traverse hardening device 1 and the traverse hardening method S according to the present embodiment, the plurality of secondary first coil members 16A and 16B in a state of being spaced apart from each other in advance are disposed to be aligned to be spaced apart from each other in the circumferential direction on the radially outer side of the small diameter part 53 of the shaft-like body 51.

Then, a high-frequency current is caused to flow in the primary coil member 11 that moves upward with respect to the shaft-like body 51. Then, in regard to the first main body part 52A and the second main body part 52B of the shaft-like body 51, electromagnetic induction of the primary coil member 11 causes a current to flow directly through the first main body part 52A and the second main body part 52B, and Joule heat is generated in the first main body part 52A and the second main body part 52B due to electrical resistance of the first main body part 52A and the second main body part 52B. The first main body part 52A and the second main body part 52B heated by Joule heat are cooled by the cooling ring 36 that moves upward following the primary coil member 11, and thereby traverse hardening of the first main body part 52A and the second main body part 52B is performed.

On the other hand, in regard to the small diameter part 53 of the shaft-like body 51, a current flows through the small diameter part 53 of the shaft-like body 51 via the secondary first coil members 16A and 16B disposed on a radially outer side of the small diameter part 53 due to electromagnetic induction, and Joule heat is generated in the small diameter part 53 due to electrical resistance of the small diameter part 53. The small diameter part 53 heated by Joule heat is similarly cooled by the cooling ring 36, and thereby traverse hardening of the small diameter part 53 is performed. When the traverse hardening of the small diameter part 53 is completed, the secondary first coil members 16A and 16B are removed outward in the radial direction from the small diameter part 53.

At this time, since the secondary first coil members 16A and 16B can be removed from the small diameter part 53 when the secondary first coil members 16A and 16B are moved outward in the radial direction from the small diameter part 53, the secondary first coil members 16A and 16B can be easily removed from the shaft-like body 51.

For example, even when the diameter R1 (that is, an inner diameter) of the inscribed circle of the secondary first coil members 16A and 16B is slightly larger than outer diameters of the first main body part 52A and the second main body part 52B of the shaft-like body 51, the secondary first coil members 16A and 16B interfering with the first main body part 52A and the second main body part 52B can be avoided.

Also, the diameter R1 (that is, an inner diameter) of the inscribed circle in contact with the outer surfaces of the secondary first coil members 16A and 16B facing the axis C is smaller than the outer diameters of the first main body part 52A and the second main body part 52B. Thereby, the secondary first coil members 16A and 16B are brought even closer to the small diameter part 53, and the small diameter part 53 can be more efficiently heated by the secondary first coil members 16A and 16B.

Also, in the present embodiment, the secondary first coil members 16A and 16B and the secondary second coil members 17A and 17B are provided. After the lower end portion of the small diameter part 53 of the shaft-like body 51 is heated by the primary coil member 11 and the secondary first coil members 16A and 16B, the secondary first coil members 16A and 16B are moved upward with respect to the primary coil member 11 using the first support pieces 20A and 20B. Thereby, since the first support pieces 20A and 20B are prevented from interfering with the primary coil member 11 and the second main body part 52B which is disposed below the small diameter part 53, the secondary first coil members 16A and 16B can be taken out from the inside of the primary coil member 11, and the secondary first coil members 16A and 16B can be separated toward a radially outward side from the small diameter part 53.

Then, after the upper end portion of the small diameter part 53 is heated by the primary coil member 11 and the secondary second coil members 17A and 17B, the secondary second coil members 17A and 17B are moved downward with respect to the primary coil member 11 using the second support pieces 26A and 26B. Thereby, since the second support pieces 26A and 26B interfering with the primary coil member 11 and the first main body part 52A which is disposed above the small diameter part 53 are suppressed, the secondary second coil members 17A and 17B can be taken out from the inside of the primary coil member **11,** and the plurality of secondary second coil members 17A and 17B can be separated toward a radially outward side from the small diameter part 53.

Further, instead of the secondary second coil member 17A and the second support part 25A, one in which the first support part 19A is removed from the secondary first coil member 16A and the first support part 19A, and then the second support part 25A is attached may be used. Alternatively, instead of the secondary second coil member 17A and the second support part 25A, one in which disposition of the secondary first coil member 16A and the first support part 19A is rotated (vertically inverted) by 180° around an axis along a horizontal plane may be used.

The first support part 19A may not include the first connecting piece 21A. The second support part 25A may not include the second connecting piece 27A. The first support part 19B may not include the first connecting piece 21B. The second support part 25B may not include the second connecting piece 27B.

When a length of the secondary first coil members 16A and 16B in the axis C direction is substantially the same as a length of the small diameter part 53 of the shaft-like body 51 in the axis C direction, the traverse hardening device 1 may not include the secondary second coil members 17A and 17B, the second support parts 25A and 25B, and the second moving units 29A and 29B. In this case, in the traverse hardening method S, the central heating step S9, the second disposing step S11, the second heating step S13, and the second separation step S17 are not performed.

Although one embodiment of the present invention has been described above, the present invention is not limited only to the above-described embodiment, and various modifications can be made without departing from the gist of the present invention.

For example, in the above-described embodiment, the shaft-like body 51 may not be disposed so that the axis C is disposed in a vertical direction, and the axis C may be disposed to be inclined with respect to the vertical direction. In this case, the primary coil member 11 and the cooling ring 36 move to be inclined with respect to the vertical direction.

The traverse hardening device 1 may not include the support member 6 and the control unit 46.

Although the shaft-like body 51 has been described as an axle of a railway vehicle, the shaft-like body 51 may be another shaft-like body such as a ball screw.

Also, FIGS. 2A to 4 has illustrated an example in which the coolant introduction port 310 and the coolant discharge port 320 of the arc-shaped coil 300 open on one side D10 in the central axis C10 direction. When the secondary coil (arc-shaped coil) is disposed inside the primary coil in a radial direction, heating with a smaller supply current is possible when a distance between the primary coil and the secondary coil is reduced. Therefore, it is desirable that the coolant introduction port 310 and the coolant discharge port 320 open in the central axis C10 direction, and it is desirable to match directions of the introduction side and the discharge side because they can be easily separated from the primary coil and easily attached and detached. However, the opening may be formed outward in the radial direction or may be formed toward the other side in the central axis C10 direction.

Also, in the above-described embodiment, the connection component for attaching and detaching the coolant introduction pipe 410 and the coolant discharge pipe 420 to and from the arc-shaped coil 300 has been described with an example of an elastic material. However, the connection component may not necessarily have to be elastically deformed as long as a fitting force can be controlled and may be a material having high rigidity.

### [Analysis result]

Hereinafter, results of simulating the traverse hardening device 1 of examples 1 and 2 based on the present embodiment and a traverse hardening device of a comparative example will be described.

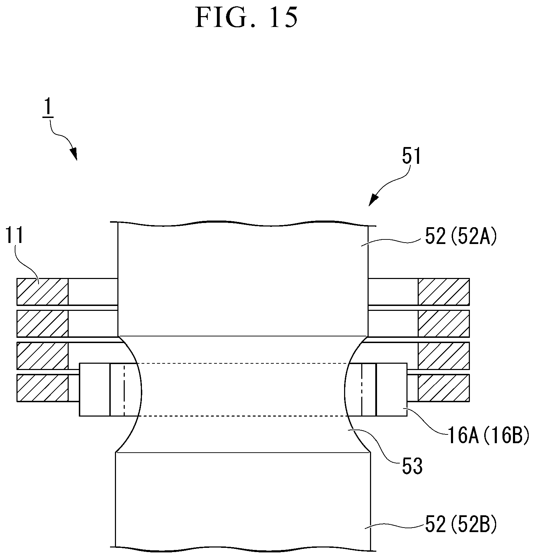

FIG. 15 illustrates an analysis model used in the simulation.

The shaft-like body 51 used in the simulation had a shape in which a length of secondary first coil members 16A and 16B in a vertical direction was not so small as compared with a length in the vertical direction of the small diameter part 53 of the shaft-like body 51, and thus a temperature of the shaft-like body 51 tended to rise when traverse hardening was performed.

Further, in the analysis model of example 1, a diameter of an inscribed circle of the secondary first coil members 16A and 16B is larger than an outer diameter of the main body part 52.

The outer diameter of the main body part 52 was set to 198 mm, and the outer diameter (minimum diameter) of the small diameter part 53 was set to 181 mm. A material of the shaft-like body 51 was carbon steel. A frequency of a high-frequency current caused to flow in the primary coil member **11** was set to 1 kHz. A maximum temperature value of the shaft-like body 51 was obtained when the shaft-like body 51 was heated to an extent required for hardening it to a certain depth using traverse hardening.

When the temperature of the shaft-like body 51 becomes excessively high (overheated) during traverse hardening, there is a problem in that a structure of the shaft-like body 51 changes. Therefore, it is preferable to suppress a maximum temperature value of the shaft-like body 51 while securing the hardening to a certain depth with respect to the shaft-like body 51.

### [Example 1]

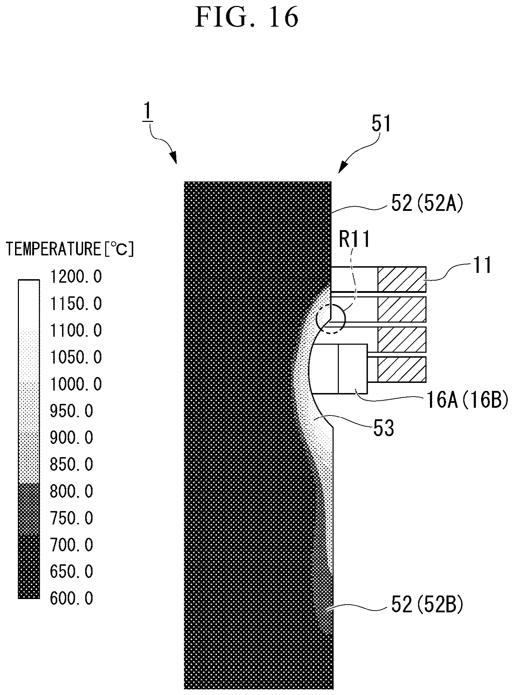

FIG. 16 shows a simulation result by the traverse hardening device 1 of example 1. In FIG. 16 and FIGS. 17 and 18 to be described later, temperature scales corresponding to shading of gray are illustrated. The temperature gradually increases as the gray becomes whiter.

When the shaft-like body 51 was subjected to traverse hardening by the traverse hardening device 1 of example 1, it was found that a temperature of a region R11 indicated a maximum temperature of the shaft-like body 51 at a position of the primary coil member 11 shown in FIG. 16 while a depth that could be heated to 800°C or higher in the small diameter part 53 was secured to 5.0 mm. The maximum temperature in the region R11 is 1149°C.

### [Example 2]

Compared to the traverse hardening device 1 of example 1, the traverse hardening device 1 of example 2 is different in that a diameter of an inscribed circle of the secondary first coil members 16A and 16B is smaller than the outer diameter of the main body part 52 as illustrated by the two-dot dashed line in FIG. 15. The diameter of the inscribed circle of the secondary first coil members 16A and 16B is smaller by 6 mm than the outer diameter of the main body part 52.

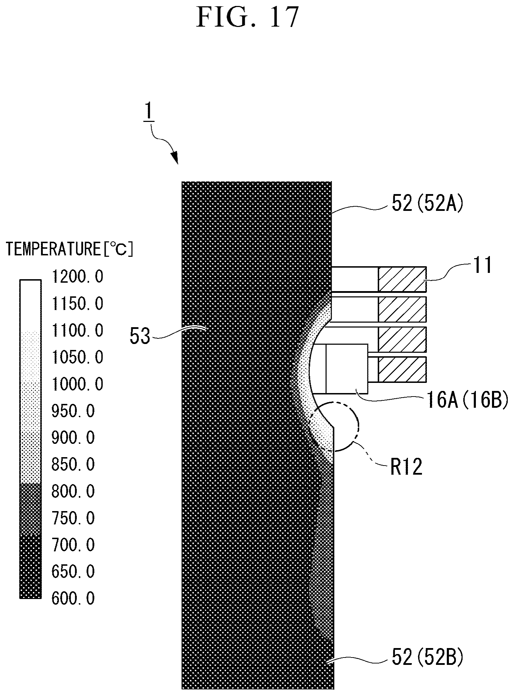

When the shaft-like body 51 was subjected to traverse hardening by the traverse hardening device 1 of example 2, it was found that a temperature of a region R12 indicated a maximum temperature of the shaft-like body 51 at a position of the primary coil member 11 shown in FIG. 17 while a depth that could be heated to 800°C or higher in the small diameter part 53 was secured to 4.8 mm. The maximum temperature in the region R12 is 1072°C.

### [Comparative example]

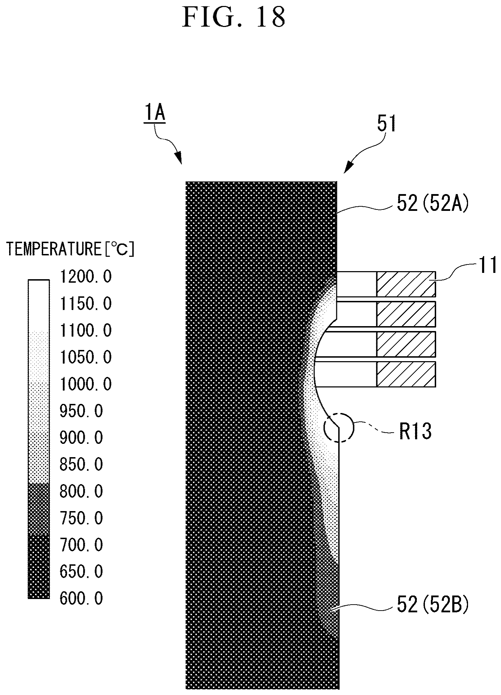

FIG. 18 shows a simulation result by a traverse hardening device 1A of a comparative example. Unlike the configuration of the traverse hardening device 1 of examples 1 and 2, the traverse hardening device 1A of the comparative example does not include the secondary first coil members 16A and 16B. When the shaft-like body 51 was subjected to traverse hardening by the traverse hardening device 1A of the comparative example, it was found that a temperature of a region R13 indicated a maximum temperature of the shaft-like body 51 even though a depth that could be heated to 800°C or higher in the small diameter part 53 could only be secured to 3.5 mm. The maximum temperature in the region R13 is 1225°C.

Compared to the traverse hardening device 1A of the comparative example, it was found that the traverse hardening device 1 of example 1 could have a 1.5 mm larger depth that could be heated to 800°C or higher in the small diameter part 53 and could reduce a maximum temperature value of the shaft-like body 51 at the time of traverse hardening by about 76°C.

Further, compared to the traverse hardening device 1 A of the comparative example, it was found that the traverse hardening device 1 of example 2 could have a 1.3 mm larger depth that could be heated to 800°C or higher in the small diameter part 53 and could reduce a maximum value of the temperature of the shaft-like body 51 at the time of traverse hardening by about 153°C.

### [Industrial Applicability]

According to the present invention, it is possible to provide a secondary coil module that can be used for shaft-like bodies with various shapes (outer diameters) and allows high ease of replacement of a secondary coil, a traverse hardening device including the secondary coil module, and a traverse hardening method that can be realized by the traverse hardening device. Therefore, industrial applicability is high.

### [Brief Description of the Reference Symbols]

100, 300 Arc-shaped coil
200 Secondary coil module
310 Coolant introduction port
320 Coolant discharge port
410 Coolant introduction pipe, cooling jig
420 Coolant discharge pipe, cooling jig
430 First connection component, cooling jig
440 Second connection component, cooling jig
450 Coolant supply pipe, cooling jig
460 Coolant recovery pipe, cooling jig
500 Grip component
1 Traverse hardening device
11 Primary coil member
16A, 16B Secondary first coil member
17A, 17B Secondary second coil member
51 Shaft-like body
52 Main body part
53 Small diameter part

## Claims

1. A secondary coil module (200) comprising:
an arc-shaped coil (100,300) having a hollow rectangular cross section; and
cooling jigs (410,420,430,440,450,460) detachably configured with respect to the arc-shaped coil (100,300), wherein
the arc-shaped coil (100,300) includes:
a coolant introduction port (310) provided at one end portion of the arc-shaped coil (100,300) in a circumferential direction; and
a coolant discharge port (320) provided at the other end portion of the arc-shaped coil (100,300) in the circumferential direction, and
the cooling jigs (410,420,430,440,450,460) include:
a coolant introduction pipe (410) having an opening distal end portion (411) configured to be fittable to the coolant introduction port (310);
a coolant discharge pipe (420) having an opening distal end portion (421) configured to be fittable to the coolant discharge port (320);
a first connection component (430) which detachably connects the opening distal end portion (411) of the coolant introduction pipe (410) to the coolant introduction port (310);
a second connection component (440) which detachably connects the opening distal end portion (421) of the coolant discharge pipe (420) to the coolant discharge port (320);
a coolant supply pipe (450) connected to the coolant introduction pipe (410) to extend outward in a radial direction of the arc-shaped coil (100,300); and
a coolant recovery pipe (460) connected to the coolant discharge pipe (420) to extend outward in the radial direction of the arc-shaped coil (100,300).

2. A secondary coil module (200) according to claim 1, wherein:
the coolant introduction port (310) opens toward one side in a central axis (C10) direction of the arc-shaped coil (100,300);
the coolant discharge port (320) opens in the same direction as the coolant introduction port (310),
the first connection component (430) detachably connects the coolant introduction pipe (410) to the arc-shaped coil (100,300) in a state in which the opening distal end portion (411) of the coolant introduction pipe (410) is fitted into the coolant introduction port (310) and a longitudinal direction of the coolant introduction pipe (410) is parallel to the central axis (C10) direction; and
the second connection component (440) detachably connects the coolant discharge pipe (420) to the arc-shaped coil (100,300) in a state in which the opening distal end portion (421) of the coolant discharge pipe (420) is fitted into the coolant discharge port (320) and a longitudinal direction of the coolant discharge pipe (420) is parallel to the central axis (C10) direction.

3. The secondary coil module (200) according to claim 2, wherein
the first connection component (430) includes
a first arm part (431) formed of an elastic material and extending in the central axis (C 10) direction;
a first fixing part (432) which fixes one end portion of the first arm part (431) in a longitudinal direction to the coolant introduction pipe (410); and
a first claw part (433) provided at the other end portion of the first arm part (431) in the longitudinal direction and protruding inward in a radial direction of the arc-shaped coil (100,300), and
the second connection component (440) includes
a second arm part (441) formed of an elastic material and extending in the central axis (C10) direction;
a second fixing part (442) which fixes one end portion of the second arm part (441) in a longitudinal direction to the coolant discharge pipe (420); and
a second claw part (443) provided at the other end portion of the second arm part (441) in the longitudinal direction and protruding inward in the radial direction of the arc-shaped coil (100,300).

4. The secondary coil module (200) according to claim 2 or 3, further comprising a grip component (500) fixed to the arc-shaped coil (100,300), wherein the grip component (500) includes:
a first portion (510) extending from the arc-shaped coil (100,300) to one side in the central axis (C10) direction; and
a second portion (520) extending outward in the radial direction of the arc-shaped coil (100,300) from the first portion.

5. A traverse hardening device (1) which performs traverse hardening on a shaft-like body (51) including a main body part (52) and a small diameter part (53) provided at an intermediate portion in an axial direction of the main body part (52) and having a smaller diameter than the main body part (52), the traverse hardening device (1) comprising:
a solenoidal primary coil member (11) through which a high-frequency current is caused to flow and inside of which the shaft-like body (51) is inserted;
the plurality of secondary coil modules (200) according to any one of claims 1 to 4; and
a positioning device which performs positioning of the plurality of secondary coil modules (200) so that the arc-shaped coils (100,300) of the plurality of secondary coil modules (200) are disposed in the primary coil member (11) in a state of being spaced apart from each other in a circumferential direction on a radially outer side of the small diameter part (53).

6. The traverse hardening device (1) according to claim 5, wherein, of end portions of the small diameter part (53), when an end portion positioned on one side (D1) in the axial direction is defined as one side end portion and an end portion positioned on the other side (D2) in the axial direction is defined as the other side end portion, the traverse hardening device (1) comprises:
a plurality of secondary first coil modules (16A, 16B) used to heat the other side end portion of the small diameter part (53); and
a plurality of secondary second coil modules (17A,17B) used to heat the one side end portion of the small diameter part (53), as the plurality of secondary coil modules (200).

7. A traverse hardening method for performing traverse hardening on a shaft-like body (51) including a main body part (52) and a small diameter part (53) provided at an intermediate portion in an axial direction of the main body part (52) and having a smaller diameter than the main body part (52), the traverse hardening method comprising:
a replacement step (S0,S10) of replacing the arc-shaped coils (100,300) of the plurality of secondary coil modules (200) according to any one of claims 1 to 4 according to a diameter of the small diameter part (53);
a disposing step (S1,S11) of positioning the plurality of secondary coil modules (200) so that the arc-shaped coils (100,300) replaced by the replacement step (S0,S10) are disposed to be spaced apart from each other in a circumferential direction on a radially outer side of the small diameter part (53); and
a heating step (S5,S13) of heating the small diameter part (53) by induction heating by disposing at least some of the arc-shaped coils (100,300) of the plurality of secondary coil modules (200) in a solenoidal primary coil member (11) when the primary coil member (11) through which a high-frequency current is caused to flow with the shaft-like body (51) inserted therein is moved in the axial direction from an end portion positioned on one side (D1) of the small diameter part (53) in the axial direction toward an end portion positioned on the other side (D2) of the small diameter part (53).

8. The traverse hardening method according to claim 7, wherein, of the pair of end portions of the small diameter part (53), when the end portion positioned on one side (D1) in the axial direction is defined as one side end portion and the end portion positioned on the other side (D2) in the axial direction is defined as the other side end portion, the traverse hardening method performs:
a first replacement step (S0) of replacing arc-shaped coils (100,300) of a plurality of secondary first coil modules (16A, 16B) included in the plurality of secondary coil modules (200) according to a diameter of the other side end portion of the small diameter part (53) as the replacement step (S0,S10);
a first disposing step (S1) of positioning the plurality of secondary first coil modules (16A,16B) so that the arc-shaped coils (100,300) thereof are disposed to be spaced apart from each other in a circumferential direction on a radially outer side of the other side end portion of the small diameter part (53) as the disposing step (S1,S11);
a first heating step (S5) of heating the other side end portion of the small diameter part (53) when at least some of the arc-shaped coils (100,300) of the plurality of secondary first coil modules (16A,16B) are disposed in the primary coil member (11) that moves relative to the shaft-like body (51) toward one side (D1) in the axial direction as the heating step (S5,S13);
a separation step (S7,S17) of moving the plurality of secondary first coil modules (16A,16B) outward in the radial direction from the small diameter part (53) after the plurality of secondary first coil modules (16A, 16B) are moved to one side (D1) in the axial direction with respect to the primary coil member (11) after the first heating step (S5);
a second replacement step (S10) of replacing arc-shaped coils (100,300) of a plurality of secondary second coil modules (17A,17B) included in the plurality of secondary coil modules (200) according to a diameter of the one side end portion of the small diameter part (53) as the replacement step (S0,S10);
a second disposing step (S11) of positioning the plurality of secondary second coil modules (17A,17B) so that the arc-shaped coils (100,300) thereof are disposed to be spaced apart from each other in a circumferential direction on a radially outer side of the one side end portion of the small diameter part (53) through the inside of the primary coil member (11) from the other side (D2) of the primary coil member (11) in the axial direction as the disposing step (S1,S11); and
a second heating step (S13) of heating the one side end portion of the small diameter part (53) when at least some of the arc-shaped coils (100,300) of the plurality of secondary second coil modules (17A,17B) are disposed in the primary coil member (11) that moves relative to the shaft-like body (51) toward one side (D1) in the axial direction as the heating step (S5,S13).

## Patentansprüche

1. Sekundärspulenmodul (200), umfassend:
eine bogenförmige Spule (100, 300) mit einem hohlen rechteckigen Querschnitt; und
Kühleinrichtungen (410, 420, 430, 440, 450, 460), die in Bezug auf die bogenförmige Spule (100, 300) abnehmbar konfiguriert sind, wobei
die bogenförmige Spule (100, 300) aufweist:
einen Kühlmitteleinlassanschluss (310), der an einem Endabschnitt der bogenförmigen Spule (100, 300) in einer Umfangsrichtung vorgesehen ist; und
einen Kühlmittelauslassanschluss (320), der am anderen Endabschnitt der bogenförmigen Spule (100, 300) in der Umfangsrichtung vorgesehen ist, und
wobei die Kühleinrichtungen (410, 420, 430, 440, 450, 460) aufweisen:
ein Kühlmitteleinlassrohr (410) mit einem distalen Öffnungsendabschnitt (411), der so konfiguriert ist, dass er an den Kühlmitteleinlassanschluss (310) angepasst werden kann;
ein Kühlmittelauslassrohr (420) mit einem distalen Öffnungsendabschnitt (421), der so konfiguriert ist, dass er an den Kühlmittelauslassanschluss (320) angepasst werden kann;
eine erste Verbindungskomponente (430), die den distalen Öffnungsendabschnitt (411) des Kühlmitteleinlassrohrs (410) lösbar mit dem Kühlmitteleinlassanschluss (310) verbindet;
eine zweite Verbindungskomponente (440), die den distalen Öffnungsendabschnitt (421) des Kühlmittelauslassrohrs (420) lösbar mit dem Kühlmittelauslassanschluss (320) verbindet;
ein Kühlmittelzufuhrrohr (450), das mit dem Kühlmitteleinlassrohr (410) verbunden ist, um sich in einer radialen Richtung der bogenförmigen Spule (100, 300) nach außen zu erstrecken; und
ein Kühlmittelrückführrohr (460), das mit dem Kühlmittelauslassrohr (420) verbunden ist, um sich in der radialen Richtung der bogenförmigen Spule (100, 300) nach außen zu erstrecken.

2. Sekundärspulenmodul (200) gemäß Anspruch 1, wobei:
der Kühlmitteleinlassanschluss (310) sich zu einer Seite in Richtung der Mittelachse (C10) der bogenförmigen Spule (100, 300) öffnet;
sich der Kühlmittelauslassanschluss (320) in derselben Richtung wie der Kühlmitteleinlassanschluss (310) öffnet,
die erste Verbindungskomponente (430) das Kühlmitteleinlassrohr (410) lösbar mit der bogenförmigen Spule (100, 300) in einem Zustand verbindet, in dem der distale Öffnungsendabschnitt (411) des Kühlmitteleinlassrohrs (410) in den Kühlmitteleinlassanschluss (310) eingepasst ist und eine Längsrichtung des Kühlmitteleinlassrohrs (410) parallel zur Richtung der Mittelachse (C10) verläuft; und
die zweite Verbindungskomponente (440) das Kühlmittelauslassrohr (420) lösbar mit der bogenförmigen Spule (100, 300) in einem Zustand verbindet, in dem der distale Öffnungsendabschnitt (421) des Kühlmittelauslassrohrs (420) in den Kühlmittelauslassanschluss (320) eingepasst ist und eine Längsrichtung des Kühlmittelauslassrohrs (420) parallel zur Richtung der Mittelachse (C10) verläuft.

3. Sekundärspulenmodul (200) nach Anspruch 2, wobei
die erste Verbindungskomponente (430) aufweist
ein erstes Armteil (431), das aus einem elastischen Material gebildet ist und sich in Richtung der Mittelachse (C10) erstreckt;
ein erstes Befestigungsteil (432), das einen Endabschnitt des ersten Armteils (431) in Längsrichtung an dem Kühlmitteleinlassrohr (410) befestigt; und
ein erstes Greifenteil (433), das am anderen Endabschnitt des ersten Armteils (431) in Längsrichtung vorgesehen ist und in radialer Richtung der bogenförmigen Spule (100, 300) nach innen vorsteht, und
die zweite Verbindungskomponente (440) aufweist
ein zweites Armteil (441), das aus einem elastischen Material gebildet ist und sich in Richtung der Mittelachse (C10) erstreckt;
ein zweites Befestigungsteil (442), das einen Endabschnitt des zweiten Armteils (441) in einer Längsrichtung an der Kühlmittelauslassleitung (420) befestigt; und
ein zweites Greifteil (443), das am anderen Endabschnitt des zweiten Armteils (441) in Längsrichtung vorgesehen ist und in radialer Richtung der bogenförmigen Spule (100, 300) nach innen vorsteht.

4. Sekundärspulenmodul (200) gemäß Anspruch 2 oder 3, das ferner eine an der bogenförmigen Spule (100, 300) befestigte Griffkomponente (500) umfasst, wobei die Griffkomponente (500) aufweist:
einen ersten Abschnitt (510), der sich von der bogenförmigen Spule (100, 300) zu der einen Seite in Richtung der Mittelachse (C10) erstreckt; und
einen zweiten Abschnitt (520), der sich vom ersten Abschnitt in radialer Richtung der bogenförmigen Spule (100, 300) nach außen erstreckt.

5. Querhärtungsvorrichtung (1), die eine Querhärtung an einem wellenartigen Körper (51) durchführt, der einen Hauptkörperteil (52) und einen Teil (53) mit kleinem Durchmesser umfasst, der an einem Zwischenabschnitt in einer axialen Richtung des Hauptkörperteils (52) vorgesehen ist und einen kleineren Durchmesser als der Hauptkörperteil (52) aufweist, wobei die Querhärtungsvorrichtung (1) umfasst:
ein solenoidales Primärspulenelement (11), durch das ein Hochfrequenzstrom fließt und in das der wellenförmige Körper (51) eingeführt wird;
die Vielzahl von Sekundärspulenmodulen (200) gemäß einem der Ansprüche 1 bis 4; und
eine Positionierungsvorrichtung, die die Positionierung der Vielzahl von Sekundärspulenmodule (200) so durchführt, dass die bogenförmigen Spulen (100, 300) der Vielzahl von Sekundärspulenmodule (200) in dem Primärspulenelement (11) in einem Zustand angeordnet sind, in dem sie in einer Umfangsrichtung auf einer radial äußeren Seite des Teils (53) mit kleinem Durchmesser voneinander beabstandet sind.

6. Querhärtungsvorrichtung (1) gemäß Anspruch 5, wobei, von den Endabschnitten des Teils mit kleinem Durchmesser (53), wenn ein Endabschnitt, der auf einer Seite (D1) in der axialen Richtung positioniert ist, als ein Seitenendabschnitt definiert ist und ein Endabschnitt, der auf der anderen Seite (D2) in der axialen Richtung positioniert ist, als der andere Seitenendabschnitt definiert ist, die Querhärtungsvorrichtung (1) umfasst:
eine Vielzahl von sekundären ersten Spulenmodulen (16A, 16B), die zum Erwärmen des anderen Seitenendabschnitts des Teils mit kleinem Durchmesser (53) verwendet werden; und
eine Vielzahl von sekundären zweiten Spulenmodulen (17A, 17B), die zum Erwärmen des einen Seitenendabschnitts des Teils mit kleinem Durchmesser (53) verwendet werden, als die Vielzahl von sekundären Spulenmodulen (200).

7. Verfahren zum Querhärten eines wellenartigen Körpers (51), der einen Hauptkörperabschnitt (52) und einen Abschnitt mit kleinem Durchmesser (53) umfasst, der an einem Zwischenabschnitt in der axialen Richtung des Hauptkörperabschnitts (52) vorgesehen ist und einen kleineren Durchmesser als der Hauptkörperabschnitt (52) aufweist, wobei das Verfahren zum Querhärten umfasst:
einen Austauschschritt (S0, S10) zum Austauschen der bogenförmigen Spulen (100, 300) der Vielzahl von Sekundärspulenmodulen (200) gemäß einem der Ansprüche 1 bis 4 gemäß einem Durchmesser des Teils mit kleinem Durchmesser (53);
einen Anordnungsschritt (S1, S11) zum Positionieren der Vielzahl von Sekundärspulenmodulen (200), so dass die durch den Austauschschritt (S0, S10) ausgetauschten bogenförmigen Spulen (100, 300) in einer Umfangsrichtung auf einer radial äußeren Seite des Teils (53) mit kleinem Durchmesser voneinander beabstandet angeordnet sind; und
einen Erwärmungsschritt (S5, S13) zum Erwärmen des Teils mit kleinem Durchmesser (53) durch Induktionserwärmung, indem mindestens einige der bogenförmigen Spulen (100, 300) der Vielzahl von Sekundärspulenmodulen (200) in einem solenoidalen Primärspulenelement (11) angeordnet werden, wenn das Primärspulenelement (11), durch das ein Hochfrequenzstrom fließt, mit dem darin eingeführten wellenartigen Körper (51) in der axialen Richtung von einem Endabschnitt, der auf der einen Seite (D1) des Teils mit kleinem Durchmesser (53) in der axialen Richtung positioniert ist, zu einem Endabschnitt, der auf der anderen Seite (D2) des Teils mit kleinem Durchmesser (53) positioniert ist, bewegt wird.

8. Verfahren zum Querhärten gemäß Anspruch 7, wobei, von dem Paar Endabschnitten des Teils mit kleinem Durchmesser (53), wenn der Endabschnitt, der auf der einen Seite (D1) in der axialen Richtung positioniert ist, als ein Seitenendabschnitt definiert ist und der Endabschnitt, der auf der anderen Seite (D2) in der axialen Richtung positioniert ist, als der andere Seitenendabschnitt definiert ist, das Verfahren zum Querhärten durchführt:
einen ersten Austauschschritt (S0) zum Austauschen von bogenförmigen Spulen (100, 300) einer Vielzahl von sekundären ersten Spulenmodulen (16A, 16B), die in der Vielzahl von sekundären Spulenmodulen (200) enthalten sind, gemäß einem Durchmesser des anderen Seitenendabschnitts des Teils (53) mit kleinem Durchmesser als den Austauschschritt (S0, S10);
einen ersten Anordnungsschritt (S1), bei dem die Vielzahl von sekundären ersten Spulenmodulen (16A, 16B) so positioniert werden, dass ihre bogenförmigen Spulen (100, 300) in einer Umfangsrichtung auf einer radial äußeren Seite des anderen Seitenendabschnitts des Teils mit kleinem Durchmesser (53) voneinander beabstandet angeordnet sind, als Anordnungsschritt (S1, S11);
einen ersten Erwärmungsschritt (S5) zum Erwärmen des anderen Seitenendabschnitts des Teils mit kleinem Durchmesser (53), wenn mindestens einige der bogenförmigen Spulen (100, 300) der Vielzahl von sekundären ersten Spulenmodulen (16A, 16B) in dem primären Spulenelement (11) angeordnet sind, das sich relativ zu dem wellenartigen Körper (51) in der axialen Richtung zu der einen Seite (D1) hin bewegt, als Erwärmungsschritt (S5, S13);
einen Trennschritt (S7, S17) des Bewegens der Vielzahl von sekundären ersten Spulenmodulen (16A, 16B) in der radialer Richtung nach außen von dem Teil mit kleinem Durchmesser (53), nachdem die Vielzahl von sekundären ersten Spulenmodulen (16A, 16B) nach dem ersten Erwärmungsschritt (S5) in der axialen Richtung in Bezug auf das Primärspulenelement (11) zu der einen Seite (D1) bewegt worden sind;
einen zweiten Austauschschritt (S10) zum Austauschen der bogenförmigen Spulen (100, 300) einer Vielzahl von sekundären zweiten Spulenmodulen (17A, 17B), die in der Vielzahl von sekundären Spulenmodulen (200) enthalten sind, gemäß einem Durchmesser des einen Seitenendabschnitts des Teils mit kleinem Durchmesser (53) als Austauschschritt (S0, S10);
einen zweiten Anordnungsschritt (S11) zum Positionieren der Vielzahl von sekundären zweiten Spulenmodulen (17A, 17B), so dass die bogenförmigen Spulen (100, 300) in Umfangsrichtung voneinander beabstandet auf einer radial äußeren Seite des einen Seitenendabschnitts des Teils (53) mit kleinem Durchmesser durch das Innere des Primärspulenelements (11) von der anderen Seite (D2) des Primärspulenelements (11) in der axialen Richtung angeordnet sind, als Anordnungsschritt (S1, S11); und
ein zweiter Erwärmungsschritt (S13) zum Erwärmen des einen Seitenendabschnitts des Teils mit kleinem Durchmesser (53), wenn mindestens einige der bogenförmigen Spulen (100, 300) der Vielzahl von sekundären zweiten Spulenmodulen (17A, 17B) in dem Primärspulenelement (11) angeordnet sind, das sich relativ zu dem wellenartigen Körper (51) in der axialen Richtung zu der einen Seite (D1) hin bewegt, als Erwärmungsschritt (S5, S13).

## Revendications

1. Module de bobine secondaire (200) comprenant :
une bobine en forme d'arc (100, 300) ayant une section transversale rectangulaire creuse ; et
des dispositifs mécaniques de refroidissement (410, 420, 430, 440, 450, 460) configurés de manière détachable par rapport à la bobine en forme d'arc (100, 300), dans lequel
la bobine en forme d'arc (100, 300) comporte :
un orifice d'introduction de réfrigérant (310) prévu au niveau d'une partie d'extrémité de la bobine en forme d'arc (100, 300) dans une direction circonférentielle ; et
un orifice d'évacuation de réfrigérant (320) prévu au niveau de l'autre partie d'extrémité de la bobine en forme d'arc (100, 300) dans la direction circonférentielle, et
les dispositifs mécaniques de refroidissement (410, 420, 430, 440, 450, 460) comportent :
un tuyau d'introduction de réfrigérant (410) ayant une partie d'extrémité distale d'ouverture (411) configurée pour pouvoir être placée sur l'orifice d'introduction de réfrigérant (310) ;
un tuyau d'évacuation de réfrigérant (420) ayant une partie d'extrémité distale d'ouverture (421) configurée pour pouvoir être placée sur l'orifice d'évacuation de réfrigérant (320) ;
un premier composant de raccordement (430) qui raccorde de manière détachable la partie d'extrémité distale d'ouverture (411) du tuyau d'introduction de réfrigérant (410) à l'orifice d'introduction de réfrigérant (310) ;
un deuxième composant de raccordement (440) qui raccorde de manière détachable la partie d'extrémité distale d'ouverture (421) du tuyau d'évacuation de réfrigérant (420) à l'orifice d'évacuation de réfrigérant (320) ;
un tuyau d'alimentation en réfrigérant (450) raccordé au tuyau d'introduction de réfrigérant (410) afin de s'étendre vers l'extérieur dans une direction radiale de la bobine en forme d'arc (100, 300) ; et
un tuyau de récupération de réfrigérant (460) raccordé au tuyau d'évacuation de réfrigérant (420) afin de s'étendre vers l'extérieur dans la direction radiale de la bobine en forme d'arc (100, 300).

2. Module de bobine secondaire (200) selon la revendication 1, dans lequel :
l'orifice d'introduction de réfrigérant (310) s'ouvre vers un côté dans une direction d'axe central (C10) de la bobine en forme d'arc (100, 300) ;
l'orifice d'évacuation de réfrigérant (320) s'ouvre dans la même direction que l'orifice d'introduction de réfrigérant (310),
le premier composant de raccordement (430) raccorde de manière détachable le tuyau d'introduction de réfrigérant (410) à la bobine en forme d'arc (100, 300) dans un état dans lequel la partie d'extrémité distale d'ouverture (411) du tuyau d'introduction de réfrigérant (410) est placée dans l'orifice d'introduction de réfrigérant (310) et une direction longitudinale du tuyau d'introduction de réfrigérant (410) est parallèle à la direction d'axe central (C10) ; et
le deuxième composant de raccordement (440) raccorde de manière détachable le tuyau d'évacuation de réfrigérant (420) à la bobine en forme d'arc (100, 300) dans un état dans lequel la partie d'extrémité distale d'ouverture (421) du tuyau d'évacuation de réfrigérant (420) est placée dans l'orifice d'évacuation de réfrigérant (320) et une direction longitudinale du tuyau d'évacuation de réfrigérant (420) est parallèle à la direction d'axe central (C10).

3. Module de bobine secondaire (200) selon la revendication 2, dans lequel
le premier composant de raccordement (430) comporte
une première partie de bras (431) formée d'un matériau élastique et qui s'étend dans la direction d'axe central (C10) ;
une première partie de fixation (432) qui fixe une partie d'extrémité de la première partie de bras (431) dans une direction longitudinale sur le tuyau d'introduction de réfrigérant (410) ; et
une première partie de griffe (433) prévue au niveau de l'autre partie d'extrémité de la première partie de bras (431) dans la direction longitudinale et qui fait saillie vers l'intérieur dans une direction radiale de la bobine en forme d'arc (100, 300), et
le deuxième composant de raccordement (440) comporte
une deuxième partie de bras (441) formée d'un matériau élastique et qui s'étend dans la direction d'axe central (C10) ;
une deuxième partie de fixation (442) qui fixe une partie d'extrémité de la deuxième partie de bras (441) dans une direction longitudinale sur le tuyau d'évacuation de réfrigérant (420) ; et
une deuxième partie de griffe (443) prévue au niveau de l'autre partie d'extrémité de la deuxième partie de bras (441) dans la direction longitudinale et qui fait saillie vers l'intérieur dans la direction radiale de la bobine en forme d'arc (100, 300).

4. Module de bobine secondaire (200) selon la revendication 2 ou 3, comprenant en outre un composant de préhension (500) fixé sur la bobine en forme d'arc (100, 300), dans lequel le composant de préhension (500) comporte :
une première partie (510) qui s'étend depuis la bobine en forme d'arc (100, 300) vers un côté dans la direction d'axe central (C10) ; et
une deuxième partie (520) qui s'étend vers l'extérieur dans la direction radiale de la bobine en forme d'arc (100, 300) depuis la première partie.

5. Dispositif de durcissement transversal (1) qui effectue un durcissement transversal sur un corps en forme d'arbre (51) comportant une partie de corps principale (52) et une partie à petit diamètre (53) prévue au niveau d'une partie intermédiaire dans une direction axiale de la partie de corps principale (52) et ayant un diamètre inférieur à celui de la partie de corps principale (52), le dispositif de durcissement transversal (1) comprenant :
un élément de bobine primaire solénoïdale (11) à travers lequel un courant à haute fréquence circule et à l'intérieur duquel le corps en forme d'arbre (51) est inséré ;
la pluralité de modules de bobines secondaires (200) selon l'une quelconque des revendications 1 à 4 ; et
un dispositif de positionnement qui effectue le positionnement de la pluralité de modules de bobines secondaires (200) de sorte que les bobines en forme d'arc (100, 300) de la pluralité de modules de bobines secondaires (200) soient disposées dans l'élément de bobine primaire (11) en étant espacées les unes des autres dans une direction circonférentielle sur un côté radialement externe de la partie à petit diamètre (53).

6. Dispositif de durcissement transversal (1) selon la revendication 5, dans lequel, parmi les parties d'extrémité de la partie à petit diamètre (53), lorsqu'une partie d'extrémité positionnée sur un côté (D1) dans la direction axiale est définie comme une partie d'extrémité latérale et une partie d'extrémité positionnée sur l'autre côté (D2) dans la direction axiale est définie comme l'autre partie d'extrémité latérale, le dispositif de durcissement transversal (1) comprend :
une pluralité de premiers modules de bobines secondaires (16A, 16B) utilisés pour chauffer l'autre partie d'extrémité latérale de la partie à petit diamètre (53) ; et
une pluralité de deuxièmes modules de bobines secondaires (17A, 17B) utilisés pour chauffer la partie d'extrémité latérale de la partie à petit diamètre (53), en guise de pluralité de modules de bobines secondaires (200).

7. Procédé de durcissement transversal destiné à effectuer un durcissement transversal sur un corps en forme d'arbre (51) comportant une partie de corps principale (52) et une partie à petit diamètre (53) prévue au niveau d'une partie intermédiaire dans une direction axiale de la partie de corps principale (52) et ayant un diamètre inférieur à celui de la partie de corps principale (52), le procédé de durcissement transversal comprenant :
une étape de remplacement (S0, S10) qui consiste à remplacer les bobines en forme d'arc (100, 300) de la pluralité de modules de bobines secondaires (200) selon l'une quelconque des revendications 1 à 4 selon un diamètre de la partie à petit diamètre (53) ;
une étape de disposition (S1, S11) qui consiste à positionner la pluralité de modules de bobines secondaires (200) de sorte que les bobines en forme d'arc (100, 300) remplacées par l'étape de remplacement (S0, S10) soient disposées de façon à être espacées les unes des autres dans une direction circonférentielle sur un côté radialement externe de la partie à petit diamètre (53) ; et
une étape de chauffage (S5, S13) qui consiste à chauffer la partie à petit diamètre (53) par chauffage par induction en disposant au moins certaines des bobines en forme d'arc (100, 300) de la pluralité de modules de bobines secondaires (200) dans un élément de bobine primaire solénoïdale (11) lorsque l'élément de bobine primaire (11) à travers lequel un courant à haute fréquence circule avec le corps en forme d'arbre (51) inséré à l'intérieur est déplacé dans la direction axiale depuis une partie d'extrémité positionnée sur un côté (D1) de la partie à petit diamètre (53) dans la direction axiale vers une partie d'extrémité positionnée sur l'autre côté (D2) de la partie à petit diamètre (53).

8. Procédé de durcissement transversal selon la revendication 7, dans lequel, parmi la paire de parties d'extrémité de la partie à petit diamètre (53), lorsque la partie d'extrémité positionnée sur un côté (D1) dans la direction axiale est définie comme une partie d'extrémité latérale et la partie d'extrémité positionnée sur l'autre côté (D2) dans la direction axiale est définie comme l'autre partie d'extrémité latérale, le procédé de durcissement transversal effectue :
une première étape de remplacement (S0) qui consiste à remplacer les bobines en forme d'arc (100, 300) d'une pluralité de premiers modules de bobines secondaires (16A, 16B) inclus dans la pluralité de modules de bobines secondaires (200) selon un diamètre de l'autre partie d'extrémité latérale de la partie à petit diamètre (53) en guise d'étape de remplacement (S0, S10) ;
une première étape de disposition (S1) qui consiste à positionner la pluralité de premiers modules de bobines secondaires (16A, 16B) de sorte que les bobines en forme d'arc (100, 300) de ceux-ci soient disposées de façon à être espacées les unes des autres dans une direction circonférentielle sur un côté radialement externe de l'autre partie d'extrémité latérale de la partie à petit diamètre (53) en guise d'étape de disposition (S1, S11) ;
une première étape de chauffage (S5) qui consiste à chauffer l'autre partie d'extrémité latérale de la partie à petit diamètre (53) lorsqu'au moins certaines des bobines en forme d'arc (100, 300) de la pluralité de premiers modules de bobines secondaires (16A, 16B) sont disposées dans l'élément de bobine primaire (11) qui se déplace par rapport au corps en forme d'arbre (51) vers un côté (D1) dans la direction axiale en guise d'étape de chauffage (S5, S13) ;
une étape de séparation (S7, S17) qui consiste à déplacer la pluralité de premiers modules de bobines secondaires (16A, 16B) vers l'extérieur dans la direction radiale depuis la partie à petit diamètre (53) une fois que la pluralité de premiers modules de bobines secondaires (16A, 16B) s'est déplacée vers un côté (D1) dans la direction axiale par rapport à l'élément de bobine primaire (11) après la première étape de chauffage (S5) ;
une deuxième étape de remplacement (S10) qui consiste à remplacer les bobines en forme d'arc (100, 300) d'une pluralité de deuxièmes modules de bobines secondaires (17A, 17B) inclus dans la pluralité de modules de bobines secondaires (200) selon un diamètre de la partie d'extrémité latérale de la partie à petit diamètre (53) en guise d'étape de remplacement (S0, S10) ;
une deuxième étape de disposition (S11) qui consiste à positionner la pluralité de deuxièmes modules de bobines secondaires (17A, 17B) de sorte que les bobines en forme d'arc (100, 300) de ceux-ci soient disposées de façon à être espacées les unes des autres dans une direction circonférentielle sur un côté radialement externe de la partie d'extrémité latérale de la partie à petit diamètre (53) à travers l'intérieur de l'élément de bobine primaire (11) depuis l'autre côté (D2) de l'élément de bobine primaire (11) dans la direction axiale en guise d'étape de disposition (S1, S11) ; et
une deuxième étape de chauffage (S13) qui consiste à chauffer la partie d'extrémité latérale de la partie à petit diamètre (53) lorsqu'au moins certaines des bobines en forme d'arc (100, 300) de la pluralité de deuxièmes modules de bobines secondaires (17A, 17B) sont disposées dans l'élément de bobine primaire (11) qui se déplace par rapport au corps en forme d'arbre (51) vers un côté (D1) dans la direction axiale en guise d'étape de chauffage (S5, S13).
